# EUROPEAN PATENT APPLICATION

(11) **EP 4 636 984 A1**
(43) Date of publication of application: **22.10.2025**
(21) Application number: 24171447.6
(22) Date of filing: 19.04.2024
(51) Int. Cl.: H02J 7/00, H02J 7/08

(54) **METHODS AND SYSTEMS FOR BACKFEED PROTECTION OF AN ELECTRICAL SYSTEM**

(71) Applicant: Instagrid GmbH, 71636 Ludwigsburg (DE)
(72) Inventor: Gutknecht, Philipp, Mönsheim (DE); Dessecker, Julian, Schwaikheim (DE); Gantenbein, Jakob, Ludwigsburg (DE)
(74) Representative: Eisenführ Speiser

(57) **Abstract**

Electrical systems may include an input port circuit configured to receive electrical energy from an external power source, a rechargeable energy storage element operable to store electrical energy received via the input port circuit; and at least one control circuit that is operable to apply a charging control waveform at the input port circuit causing the rechargeable energy storage element to be charged in a controlled manner with regard to a current applied to the rechargeable energy storage element, provide a level signal indicative of flow of current and/or power between the input port circuit and the rechargeable energy storage element, monitor the level signal with regard to a threshold value, and, stop applying the charging control waveform at the input port circuit upon a determination that the level signal satisfies the threshold value. Methods and computer program products are also disclosed.

## Description

### TECHNICAL FIELD

This disclosure relates generally to aspects of power supplies and, in some non-limiting embodiments, to protection schemes for power supplies.

### BACKGROUND

A power supply may refer to an electrical device that supplies electrical power to an electrical load. A purpose of a power supply may be to convert electric current from a power source to the correct voltage, current, and frequency to power the load. Some power supplies are standalone pieces of equipment, while others may be built into a load (e.g., appliances) to which the power supply provides power. In some examples, a power supply may be portable, such that the power supply has an internal power storage device, such as a battery, for providing power to a load when other power sources are not available to provide power to the load. Situations where this may be desirable include construction sites, live events, disaster responses, and/or the like.

However, during charging scenarios of such a power supply, an external power source that is supplying electrical current to the power supply may be disconnected. In such a situation, due the internal battery and/or other electrical components, it may be possible that electrical power is fed back at the input of the power supply where the power supply was previously being charged. There is, thus, a need to prevent a situation that the power supply provides electrical current to an electrical load connected at the input that could result in an unsafe situation, such as an exposed portion of the input (e.g., a plug), which may result in injury.

### SUMMARY

Provided are systems, methods, products, apparatuses, and/or devices for backfeed protection of an electrical system.

According to some non-limiting embodiments, provided is an electrical system, comprising: e.g., an input port circuit configured to receive electrical energy from an external power source; a rechargeable energy storage element configured to store electrical energy received via the input port circuit; and at least one control circuit operable or configured to: apply a charging control waveform at the input port circuit causing the rechargeable energy storage element to be charged in a controlled manner with regard to a current applied to the rechargeable energy storage element (e.g., with regard to a current applied to the rechargeable energy storage element); provide a level signal indicative of flow of current and/or power between the input port and the rechargeable energy storage element; monitor the level signal with regard to a threshold value; and stop applying the charging control waveform at the input port circuit upon a determination that the level signal satisfies the threshold value.

By "indicative of flow of current and/or power" it is meant that the level signal may include information related to any one or more of parameters: direction, magnitude, whether current and/or power are flowing between the input port (e.g., via input port circuit or any one or more components thereof) and the rechargeable energy storage element, their likes, or any of their combination.

In some non-limiting embodiments, the level signal is a power signal. In some non-limiting embodiments, the level signal comprises a power signal.

In some non-limiting embodiments, the at least one control circuit is operable to: measure a current at the input port circuit to provide an input current measurement; measure a voltage at the input port circuit to provide an input voltage measurement; and, generate the power signal based upon the input current measurement and the input voltage measurement.

Additionally or alternatively, in some non-limiting embodiments, the level signal may comprise a saturation signal. In some non-limiting embodiments, the level signal, or the saturation signal, is generated in response to a saturation (e.g., saturation state) of a control function. In some non-limiting embodiments, the control function is operable to generate the charging control waveform. For example, a saturation state of the control function can generate the level signal or the saturation signal. In some non-limiting embodiments, the control function may be a part of the at least one control circuit, e.g., in hardware and/or software form.

It shall be appreciated that the level signal may be the power signal, or the level signal may be the saturation signal, or the level signal may include any or both of the power signal and the saturation signal, occurring at the same time or at different times. It shall also be appreciated that terms such as "monitoring with regard to a threshold value" and "satisfying the threshold value" for the level signal may mean that respective signals (power signal and saturation signal) are monitored with respect to their corresponding threshold values. It shall be appreciated that "stop applying the charging control waveform at the input port circuit upon a determination that the level signal satisfies the threshold value" may involve either or both of the signals (power signal and saturation signal) satisfying their respective threshold values.

According to some non-limiting embodiments, provided is an electrical system, comprising: an input port circuit configured to receive electrical energy from an external power source; a rechargeable energy storage element configured to store electrical energy received via the input port circuit; and at least one control circuit configured to: apply a charging control waveform at the input port circuit causing the rechargeable energy storage element to be charged in a controlled manner (e.g., with regard to a current applied to the rechargeable energy storage element); measure a current at the input port circuit to provide an input current measurement; measure a voltage at the input port circuit to provide an input voltage measurement; generate a power signal based upon the input current measurement and the input voltage measurement; monitor the power signal with regard to a threshold value; and stop applying the charging control waveform at the input port circuit upon a determination that the power signal satisfies the threshold value.

According to some non-limiting embodiments, provided is an electrical system, comprising: e.g., an input port circuit configured to receive electrical energy from an external power source; a rechargeable energy storage element configured to store electrical energy received via the input port circuit; and at least one control circuit operable or configured to: apply a charging control waveform at the input port circuit causing the rechargeable energy storage element to be charged in a controlled manner with regard to a current applied to the rechargeable energy storage element (e.g., with regard to a current applied to the rechargeable energy storage element); provide a saturation signal indicative of flow of current and/or power between the input port and the rechargeable energy storage element (e.g., by a saturation of a control function); monitor the saturation signal with regard to a threshold value; and stop applying the charging control waveform at the input port circuit upon a determination that the saturation signal satisfies the threshold value.

In some non-limiting embodiments, the electrical system further comprises: an inverter circuit connected to the rechargeable energy storage element, wherein the inverter circuit is configured to convert electrical energy stored in the rechargeable energy storage element to an AC output voltage.

In some non-limiting embodiments, the at least one control circuit is further configured to: generate the charging control waveform, e.g., based on the voltage at the input port circuit.

In some non-limiting embodiments, when generating the charging control waveform, the at least one control circuit is configured to: generate the charging control waveform such that the charging control waveform is time synchronized with the voltage at the input port circuit.

In some non-limiting embodiments, when generating the power signal, or the level signal, using the input current measurement and the input voltage measurement, the at least one control circuit is configured to: multiply the input current measurement and the input voltage measurement.

In some non-limiting embodiments, when measuring the current at the input port circuit to provide the input current measurement, the at least one control circuit is configured to: measure a charging current provided to at least one rechargeable energy storage element.

In some non-limiting embodiments, when measuring the voltage at the input port circuit to provide the input voltage measurement, the at least one control circuit is configured to: measure a voltage across a capacitor of the input port circuit to provide the input voltage measurement.

In some non-limiting embodiments, the at least one control circuit is further configured to: determine whether the power signal, or the level signal, satisfies the threshold value.

In some non-limiting embodiments, when determining whether the power signal, or the level signal, satisfies the threshold value, the at least one control circuit is configured to: provide the power signal as an input to a low pass filter; and determine whether the power signal satisfies the threshold value based on an output of the low pass filter.

In some non-limiting embodiments, the low pass filter is configured to filter the power signal, or the level signal, based on a time element associated with at least one of the following: the input current measurement, the input voltage measurement, or any combination thereof.

According to some non-limiting embodiments, provided is a method, comprising: applying a charging control waveform at an input port so as to cause a rechargeable energy storage element to be charged via the electrical energy received at the input port circuit in a controlled manner (e.g., with regard to a current applied to the rechargeable energy storage element); providing a level signal indicative of flow of current and/or power between the input port and the rechargeable energy storage element; monitoring the level signal with regard to a threshold value; and stopping application of the charging control waveform at the input port circuit upon determining that the level signal satisfies the threshold value.

In some non-limiting embodiments, the level signal is a power signal. In some non-limiting embodiments, the level signal comprises a power signal.

In some non-limiting embodiments, the method comprises: measuring a current at the input port circuit to provide an input current measurement; measuring a voltage at the input port circuit to provide an input voltage measurement; and, generating the power signal based upon the input current measurement and the input voltage measurement.

Additionally or alternatively, in some non-limiting embodiments, the level signal comprises a saturation signal. For example, a saturation state of a control function may be used to generate the saturation signal (e.g., as a part of the level signal, or as the level signal itself). The control function may be a part of the at least one control circuit. The control function may be operable to generate the charging control waveform. In other words, the saturation signal or the level signal may be generated in response to a saturation (e.g., a saturation state) of a control function operable to generate the charging control waveform.

According to some non-limiting embodiments, provided is a method, comprising: measuring a current at the input port circuit to provide an input current measurement; measuring a voltage at the input port circuit to provide an input voltage measurement; applying a charging control waveform at the input port so as to cause a rechargeable energy storage element to be charged via the electrical energy received at the input port circuit in a controlled manner (e.g., with regard to a current applied to the rechargeable energy storage element); generating a power signal based upon the input current measurement and the input voltage measurement; monitoring the power signal with regard to a threshold value; and stopping application of the charging control waveform at the input port circuit upon determining that the power signal satisfies the threshold value.

According to some non-limiting embodiments, provided is a method, comprising: applying a charging control waveform at an input port so as to cause a rechargeable energy storage element to be charged via electrical energy received at the input port circuit in a controlled manner with regard to a current applied to a rechargeable energy storage element; providing a saturation signal indicative of flow of current and/or power between the input port and the rechargeable energy storage element (e.g., by a saturation of a control function); monitor the saturation signal with regard to a threshold value; and stop applying the charging control waveform at the input port circuit upon a determination that the saturation signal satisfies the threshold value.

In some non-limiting embodiments, the method further comprises: generating the charging control waveform based on the voltage at the input port circuit.

In some non-limiting embodiments, generating the charging control waveform comprises: generating the charging control waveform such that the charging control waveform is time synchronized with the voltage at the input port circuit.

In some non-limiting embodiments, generating the power signal comprises: multiplying the input current measurement and the input voltage measurement.

In some non-limiting embodiments, measuring the current at the input port circuit to provide the input current measurement comprises: measuring a charging current provided to a rechargeable energy storage element.

In some non-limiting embodiments, measuring the voltage at the input port circuit to provide the input voltage measurement comprises: measuring a voltage across a capacitor of the input port circuit to provide the input voltage measurement.

In some non-limiting embodiments, the method further comprises: determining whether the power signal or the level signal satisfies the threshold value.

In some non-limiting embodiments, determining whether the power signal satisfies the threshold value comprises: providing the power signal or the level signal as an input to a low pass filter; and determining whether the power signal satisfies the threshold value based on an output of the low pass filter.

In some non-limiting embodiments, the low pass filter is configured to filter the power signal or the level signal based on a time element associated with at least one of the following: the input current measurement, the input voltage measurement, or any combination thereof.

It shall be appreciated that according to some non-limiting embodiments, there can also be provided an electrical system, comprising: at least one control circuit operable to: apply a charging control waveform at an input port circuit causing a rechargeable energy storage element to be charged in a controlled manner with regard to a current applied to a rechargeable energy storage element; provide a level signal indicative of flow of current and/or power between the input port and the rechargeable storage element; monitor the level signal with regard to a threshold value; and stop applying the charging control waveform at the input port circuit based on determining that the level signal satisfies the threshold value.

According to some non-limiting embodiments, provided is an electrical system, comprising: at least one control circuit configured to: measure a current at an input port circuit to provide an input current measurement; measure a voltage at the input port circuit to provide an input voltage measurement; generate a power signal using the input current measurement and the input voltage measurement; apply a charging control waveform at the input port circuit causing a rechargeable energy storage element to be charged in a controlled manner with regard to a current applied to the rechargeable energy storage element; monitor the power signal with regard to a threshold value; and stop applying the charging control waveform at the input port circuit based on determining that the power signal satisfies the threshold value. Similar aspects for level signal, power signal, and saturation signal as discussed herein can also apply here.

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

### BRIEF DESCRIPTION OF THE DRAWINGS

Additional advantages and details are explained in greater detail below with reference to the exemplary embodiments that are illustrated in the accompanying figures, in which:
FIG. 1 is a component level diagram of a non-limiting embodiment of an environment in which systems, methods, and/or computer program products, described herein, may be implemented;
FIG. 2 is a flowchart of a non-limiting embodiment of a process for backfeed protection of an electrical system;
FIGS. 3A-3B are schematic diagrams of a non-limiting embodiment of an energy storage module;
FIG. 3C is a schematic diagram of a non-limiting embodiment of a power module and associated circuitry;
FIGS. 4A-4B are diagrams of an overview of an implementation of an electrical system that provides for backfeed protection as described herein;
FIG. 5A is a diagram of a non-limiting embodiment of an electrical system that provides for backfeed protection;
FIG. 5B are diagrams of non-limiting embodiments of waveforms produced by the electrical system shown in FIG. 5A;
FIG. 6 is a diagram of a non-limiting embodiment of certain aspects of a control circuit of an electrical system that provides for backfeed protection;
FIG. 7 is a diagram of another non-limiting embodiment of certain aspects of a control circuit of an electrical system that provides for backfeed protection; and
FIG. 8 is a diagram of a non-limiting embodiment of a computing device.

### DETAILED DESCRIPTION

It is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments. Hence, specific dimensions and other physical characteristics related to the embodiments disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items, and may be used interchangeably with "one or more" and "at least one." As used in the specification and the claims, the singular form of "a," "an," and "the" include plural referents, such as unless the context clearly dictates otherwise. Additionally, as used herein, the terms "set" and "group" are intended to include one or more items (e.g., related items, unrelated items, a combination of related and unrelated items, etc.) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. Further, the phrase "based on" is intended to mean "based at least partially on" unless explicitly stated otherwise. Further, the phrase "based on" may mean "in response to" and be indicative of a condition for automatically triggering a specified operation of an electronic device (e.g., a processor, a computing device, etc.) as appropriately referred to herein.

It will be apparent that systems and/or methods, described herein, can be implemented in different forms of hardware (e.g., electrical circuitry), software, or a combination of hardware and software. The actual specialized control hardware or software code used to implement these systems and/or methods is not limiting of the implementations. Thus, the operation and behavior of the systems and/or methods are described herein without reference to specific software code, it being understood that software and hardware can be designed to implement the systems and/or methods based on the description herein.

Some non-limiting embodiments are described herein in connection with thresholds. As used herein, satisfying a threshold may refer to a value being greater than the threshold, more than the threshold, higher than the threshold (e.g., violating the threshold), greater than or equal to the threshold, less than the threshold, fewer than the threshold, lower than the threshold, less than or equal to the threshold, equal to the threshold, etc.

The present disclosure provides methods, systems, and computer program products that provide backfeed protection to an electrical system, such as an electrical inverter system having an input port circuit configured to receive power from an external power source, such as alternating current (AC) mains power, and to charge one or more rechargeable energy storage elements via the power received from the external power source when the input port circuit is connected to the external power source. In some non-limiting embodiments, the electrical system includes a control circuit that may be configured to apply a charging control waveform at the input port circuit. The charging control waveform may cause or allow the one or more rechargeable energy storage elements to be charged in a controlled manner with respect to the current received from the external power source. For example, the charging control waveform can be a waveform applied at the input port (which may be receiving AC current from an external source such as a wall socket) to control a voltage difference across an impedant component (e.g., an inductor), such that a controlled charging current that flows through one or more rechargeable energy storage elements. This can ensure that the rechargeable energy storage elements are charged effectively by charging current which is dependent (proportional) e.g., on a difference between an input voltage (which may be an external AC voltage) and the charging control waveform. For example, the instantaneous charging current flowing through the rechargeable energy storage elements could be determined by the voltage difference between the instantaneous voltage of the external power source and the charging control waveform.

In some non-limiting embodiments, the control circuit may be further configured to measure a current at the input port circuit to provide an input current measurement and to measure a voltage at the input port circuit to provide an input voltage measurement. In some non-limiting embodiments, the control circuit may be configured to generate a power signal using the input current measurement and the input voltage measurement and to monitor the power signal with regard to a threshold value. The power signal may be provided as a level signal (e.g., level signal may comprise the power signal and/or a saturation signal). In one example, the control circuit may be configured to determine whether the power signal satisfies (e.g., violates or exceeds) a threshold value, such as a threshold value that is indicative of a disruption in the supply of power from the external power source. Such a disruption may be caused by, for example, a disrupted connection (e.g., unplugging) between the input port circuit and the external power supply. In some non-limiting embodiments, the control circuit may be configured to stop applying the charging control waveform at the input port circuit upon determining that the power signal satisfies the threshold value. In one example, the control circuit may be configured to cause electrical generation within the electrical system to cease upon determining that the power signal satisfies the threshold value. More generally, via the level signal (e.g., power signal and/or saturation signal), undesired flow of power between the input port and the rechargeable energy storage element is detected, and the charging control waveform is ceased from being applied at the input port. For purposes of clarity, the flow of power "between" the input port and the rechargeable energy storage element is not limited to flow in a particular direction, and may include, e.g., the flow of power from the input port to the rechargeable energy storage element or the flow of power from the rechargeable energy storage element to the input port.

In this way, the electrical system may provide a backfeed protection scheme that prevents a voltage and/or current (e.g., the charging control waveform) to be provided at (e.g., from) the input of the electrical system from which the electrical system may have previously been charged by an external power source. It shall be appreciated that the input of the electrical system may be connected to the external power source via an electrical net, such as a mains socket. The connection might be via a suitable medium, such as a cable. The present disclosure, thus, prevents the input port of the electrical system from supplying power to the electrical net. Accordingly, the electrical system may also prevent current from being provided to a load which is also connected to the electrical net (e.g., at a location that is downstream of the electrical system) when the connection with the external power source is lost or disrupted during charging, so as to prevent unsafe situations and injuries.

The following examples may be discussed with embodiments where power signal is used and with embodiments where saturation signal is used. It shall be appreciated that either of these signals may be regarded as a level signal, or the level signal may comprise either or both of these signals. For example, in non-limiting embodiments where either of the power signal and the saturation signal are possible, whichever signal which satisfies its threshold value may be regarded as the level signal which is used for stopping application of the charging control waveform.

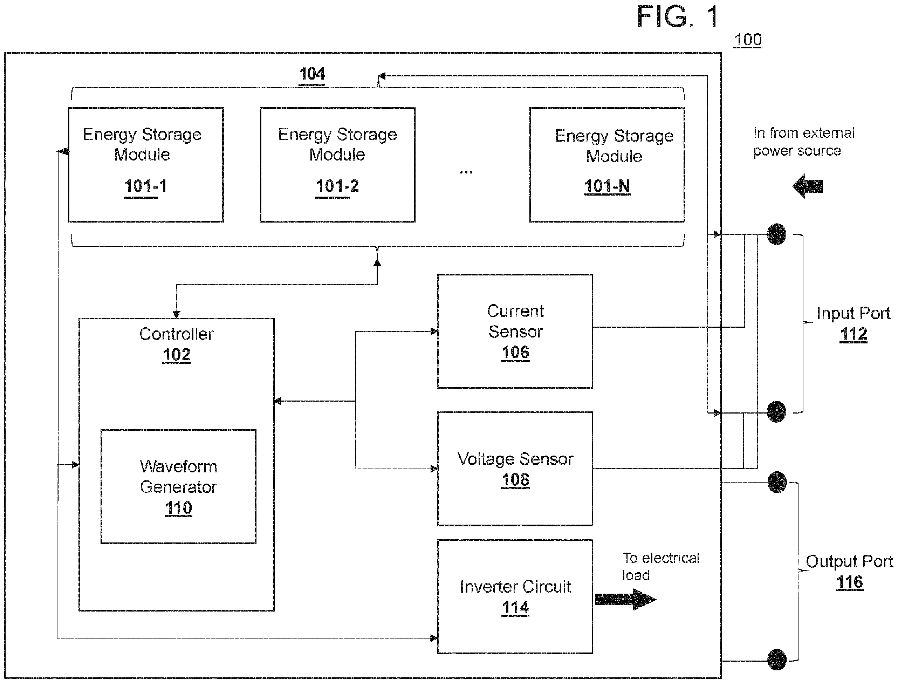

Referring now to FIG. 1, FIG. 1 is a component level block diagram of electrical system 100 in which systems, methods, products, apparatuses, and/or devices described herein, may be implemented. As shown in FIG. 1, electrical system 100 may include controller 102, energy storage modules 101-1 through 101-N (referred to individually as energy storage module 101 and collectively as energy storage modules 101, where appropriate), current sensor 106, voltage sensor 108, waveform generator 110, input port 112, inverter circuit 114, and output port 116. In some non-limiting embodiments, energy storage modules 101 and inverter circuit 114 may be part of or form a power module 104 operable to generate an output power, such as an AC voltage from energy stored in energy storage modules 101, such as in energy storage elements of energy storage modules 101. In some non-limiting embodiments, electrical system 100 may be a self-contained unit. For example, all components of electrical system 100 may be positioned within an enclosure (e.g., a housing). In some non-limiting embodiments, at least some of the components of electrical system 100 may be included in a common component which performs functions of two or more components shown in FIG. 1. For example, controller 102 and waveform generator 110 may be the same component, e.g., the controller 102 may include a waveform generator 110.

According to non-limiting embodiments of the present disclosure, preventing voltage, current, and/or power at input port 112 can help reduce or eliminate certain safety and other risks that may exist once a flow of power from an external power source (supplying power to electrical system 100) and input port 112 has been disrupted. For example, if a power plug of a power cord has been disconnected from input port 112 or a power plug has been disconnected from an electrical outlet of an external power source (e.g., a power plug at an opposite end of a power cord that is feeding power to electrical system 100 during charging), the presence of voltage or current at input port 112 or downstream of input port 112 could pose a safety risk to a person who is able to come into contact with an exposed conductor (e.g., the prongs of a power plug that is no longer plugged into an electrical outlet). By way of further example, if a faulty external device connected to (e.g., connected in parallel with) electrical system 100 has caused a switch (e.g., switch 414, which may include a miniature circuit breaker) of electrical system 100 to trip, current from input port 112 may continue to supply current to that faulty external device. Preventing voltage and/or current at input port 112 can help reduce or eliminate these and other safety risks.

In some non-limiting embodiments, electrical system 100 may be sized and configured to be portable. Examples of electrical systems that may be portable are described in United States Patent Application Publication No. 2022/0360094, the disclosure of which is incorporated by reference herein in its entirety, and United States Provisional Patent Application No. 63/556,996, the disclosure of which is incorporated by reference herein in its entirety. In some examples, electrical system 100 may be sized and configured to be carried by a person. In another example, electrical system 100 may be sized and configured to be positioned on a cart, a trailer, a vehicle, and/or the like. In some non-limiting embodiments, electrical system 100 may be configured to provide an output power in a range of 1 kW to 1 MW, in some embodiments, 2 kW to 800 kW. In some non-limiting embodiments, electrical system 100 may be configured as an electrical inverter system, an electrical system, and/or the like. Accordingly, electrical system 100 may allow for providing power at any location (e.g., even if utility (e.g., mains) electric power is not readily available or accessible). Even when mains electric power is available, electrical system 100 may allow for providing electric power to prevent interruptions in power (e.g., used as an uninterruptable power supply (UPS)) and/or to condition power (e.g., as the output power is controllable/selectable, devices connected to an electrical system, according to the disclosed subject matter, may receive well-conditioned power that is free from voltage spikes, current surges, interruptions or reductions in power, and/or the like, which may occur from time to time with mains electric power).

Controller 102 may include one or more devices (e.g., one or more circuits, one or more circuit components, etc.) capable of communicating with energy storage modules 101, power module 104, current sensor 106, voltage sensor 108, and/or waveform generator 110. For example, controller 102 may include a circuit (e.g., a control circuit), a processor, a computing device, and/or other like devices. In some non-limiting embodiments, controller 102 may include or be part of a control circuit (e.g., control circuit 402 as described herein). In some non-limiting embodiments, controller 102 may be configured to receive a current measurement and/or a voltage measurement (e.g., data associated with current and/or voltage measurements), perform operations (e.g., mathematical operations) on the measurements, generate a power signal (e.g., a signal based upon the measurements or results of operations on the measurements), monitor and compare the power signal with a threshold value, and/or cause generation of voltage and/or current within the electrical system, in the form of a charging control waveform, to cease. In some non-limiting embodiments, controller 102 may be configured to deactivate electrical system 100. As shown in FIG. 1, controller 102 may include waveform generator 110.

In some non-limiting embodiments, controller 102 may include other components of electrical system 100, or controller 102 may be a part of other components of electrical system 100.

Power module 104 may include energy storage modules 101 each of which includes one or more energy storage elements, which may be in the form of, or it may include, a battery that is rechargeable (e.g., an accumulator) for storing power that can be later discharged. Additionally, or alternatively, an energy storage element may include a capacitor (e.g., a super capacitor). In some non-limiting embodiments, power module 104 may include components (e.g., circuitry) to control the parameters of power (e.g., in the form of a charging current) provided to the energy storage modules 101. In some non-limiting embodiments, power module 104 may include other components of electrical system 100, such as controller 102, or power module 104 may be a part of other components of electrical system 100.

Current sensor 106 may include one or more devices capable of measuring (e.g., detecting, sensing, etc.) electrical current, generating data associated with the electrical current, and/or communicating the data to controller 102. For example, current sensor 106 may include a circuit, a processor, a controller, a computing device, and/or other like devices. Additionally or alternatively, current sensor 106 may include an ammeter, such as a current transformer, a magnetic field sensor, shunt measurement circuit (e.g., a circuit with a shunt resistor disposed in the current flow path) and/or other like devices or their combinations.

Voltage sensor 108 may include one or more devices capable of measuring voltage, generating data associated with the voltage, and communicating the data to controller 102. For example, voltage sensor 108 may include a circuit, a processor, a controller, a computing device, and/or other like devices. Additionally or alternatively, voltage sensor 108 may include a voltmeter, such as an electrometer, resistor divider circuit (e.g., resistive voltage divider), and/or other like devices or their combinations.

Waveform generator 110 may include one or more devices capable of generating a waveform, such as a charging control waveform or a reference waveform associated with a current and/or a voltage, and communicating with controller 102 and/or power module 104. For example, waveform generator 110 may include a circuit, a processor, a controller, a computing device, and/or other like devices. In some non-limiting embodiments, waveform generator 110 may include other components of electrical system 100, such as controller 102, or waveform generator 110 may be a part of other components of electrical system 100. As described in more detail below, waveform generator 110 can generate a reference waveform that may be indicative of the desired (e.g, target) charging waveform. The reference waveform may be fed to a closed loop control system where it is compared to the actual charging current. The closed loop control system can then adjust (e.g., via the charging control waveform) the actual charging current to better align with the reference waveform.

Input port 112 may include one or more devices for connecting (e.g., electrically connecting and/or physically connecting) an external power source to electrical system 100. For example, input port 112 may include a power plug (e.g., a commercially available 2 or 3 prong plug, or a custom plug) and/or a receptacle to receive a connector from the external power source. By way of example, input port 112 may connect to an external power source, where the external power source is in the form of an electrical grid (or electrical net) that provides AC power through a wall socket or other electrical connection. In some non-limiting embodiments, input port 112 may be configured to allow for a temporary connection (e.g., a power plug that is designed to be inserted and removed from a wall socket) and/or a permanent connection (e.g., a hardwired connection) to an external power source. In some non-limiting embodiments, input port 112 may be an AC input (e.g., an input that is configured to receive AC power). In some non-limiting embodiments, input port 112 may be a direct current (DC) input (e.g., an input that is configured to receive DC power). In some non-limiting embodiments, input port 112 may include or be part of an input port circuit (e.g., input port circuit 412 as described herein). In some non-limiting embodiments, input port 112 may include components for power conditioning of power provided to electrical system 100. For example, input port 112 may include one or more capacitors, one or more inductors, and/or the like or their combinations. In some non-limiting embodiments, input port 112 may be configured for receiving AC mains power.

Inverter circuit 114 may include one or more devices to convert electrical energy stored in energy storage modules 101 to a desired AC output voltage (e.g., an AC mains output voltage), such as an AC voltage in a range of 110V to 120V (e.g., at a frequency in a range of 50 Hz to 60 Hz) and/or an AC voltage in a range of 220V to 240V (e.g., at a frequency in a range of 50 Hz to 60 Hz). In some non-limiting embodiments, inverter circuit 114 may be connected to output port 116 and inverter circuit 114 may be operable to provide the AC output voltage at output port 116. In some non-limiting embodiments, inverter circuit 114 may be an H-bridge inverter or multi-level inverter (e.g., a cascaded inverter such as a cascaded H-bridge inverter).

In some non-limiting embodiments, inverter circuit 114 is a part of the power module 104 and/or part of the energy storage modules 101-1 ... 101-N. In some non-limiting embodiments, some or all of the energy storage modules 101-1 ... 101-N comprise an inverter circuit. In some non-limiting embodiments, the energy storage modules 101-1 ... 101-N, some or each comprising an inverter circuit are included in the power module 104.

Output port 116 may include one or more devices for connecting (e.g., electrically connecting and/or physically connecting) an electrical load to electrical system 100. For example, output port 116 may include a power plug (e.g., a commercially available 2 or 3 prong plug, or a custom plug) and/or a receptacle to receive a connector from the electrical load. In some non-limiting embodiments, output port 116 may be configured to allow for a temporary connection (e.g., a power plug that is designed to be inserted and removed from a wall socket) and/or a permanent connection (e.g., a hardwired connection) to an electrical load. In some non-limiting embodiments, output port 116 may be an AC output (e.g., an output that is configured to provide AC power). In some non-limiting embodiments, output port 116 may be a DC output (e.g., an output that is configured to provide DC power). In some non-limiting embodiments, output port 116 may include or be part of an output port circuit. In some non-limiting embodiments, output port 116 may include components for power conditioning of power provided to an electrical load. For example, output port 116 may include one or more capacitors, one or more inductors, and/or the like or their combinations. In some non-limiting embodiments, output port 116 may be configured for provide power that is the same or similar to AC mains power.

The number and arrangement of devices and systems shown in FIG. 1 is provided as an example. There may be additional devices and/or systems, fewer devices and/or systems, different devices and/or systems, or differently arranged devices and/or systems than those shown in FIG. 1. Furthermore, two or more devices and/or systems shown in FIG. 1 may be implemented within a single device and/or system, or a single device and/or system shown in FIG. 1 may be implemented as multiple, distributed devices and/or systems. Additionally or alternatively, a set of devices and/or systems (e.g., one or more devices or systems) of electrical system 100 may perform one or more functions described as being performed by another set of devices and/or systems of electrical system 100.

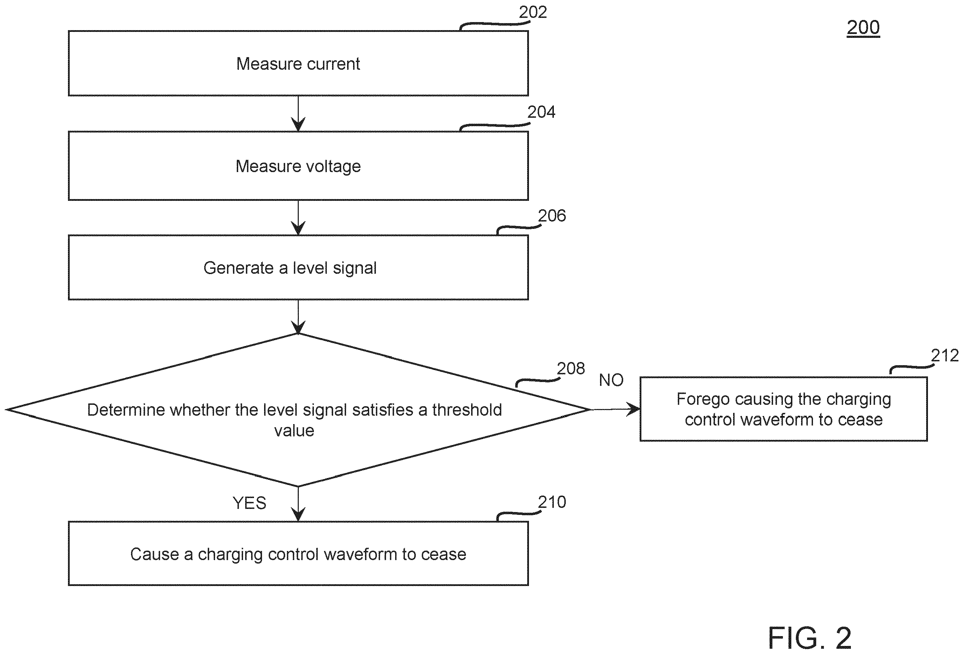

Referring now to FIG. 2, FIG. 2 is a flowchart of non-limiting embodiments of process 200 for providing backfeed protection to an electrical system, in this example, using power signal. In some non-limiting embodiments, one or more of the steps of process 200 may be performed (e.g., completely, partially, etc.) by controller 102 (e.g., one or more devices of controller 102, etc.). In some non-limiting embodiments, one or more of the steps of process 200 may be performed (e.g., completely, partially, etc.) by another device or a group of devices separate from or including controller 102, such as power module 104 and/or waveform generator 110. In some non-limiting embodiments, one or more of the steps of process 200 may be performed by a device or system that is external to electrical system 100 (e.g., a remote computing device).

As shown in FIG. 2, at step 202, process 200 includes measuring current. For example, controller 102 may measure (e.g., by sampling) a current (e.g., a measurement of electrical current in amps) at input port 112 to provide an input current measurement (e.g., a digital sample of the input current). In some non-limiting embodiments, controller 102 may measure a charging current (e.g., a charging current waveform) provided to a rechargeable energy storage element. The charging current may include a current provided directly to the rechargeable energy storage element to charge the rechargeable energy storage element. The rechargeable energy storage element may be configured to store electrical energy (e.g., energy received in the form of the charging current) received via input port 112.

In some non-limiting embodiments, controller 102 may receive data associated with current. For example, controller 102 may receive data associated with current (e.g., a measurement of an electrical current) between input port 112 of electrical system 100 and power module 104. In some non-limiting embodiments, current sensor 106 may measure a current (e.g., an amount and/or direction of current) flowing between input port 112 and power module 104, current sensor 106 may provide data associated with the current to controller 102, and controller 102 may receive the data from current sensor 106. In some non-limiting embodiments, the current may be measured in units of amps (A), milliamps (mA), and/or the like. In some non-limiting embodiments, the data associated with current may include measurement of current (e.g., a real-time value of current) as a continuous signal, a discrete (e.g., sample-wise time dependent) signal, and/or the like.

In some non-limiting embodiments, the current may include an AC current, and the data associated with current may include a waveform (e.g., a sinusoidal waveform) associated with the AC current. In some non-limiting embodiments, the data associated with current may include other information, such as, magnitude, direction of the current. In some non-limiting embodiments, controller 102 may receive data associated with measurement of a current that is provided as a charging current (e.g., a current being fed to power module 104). For example, controller 102 may receive data associated with measurement of a current that is provided as a charging current to a power source, such as a battery, of power module 104.

As shown in FIG. 2, at step 204, process 200 includes measuring voltage. For example, controller 102 may measure (e.g., by sampling) a voltage at input port 112 to provide an input voltage measurement (e.g., a sample of the input voltage). The timing of step 204 relative to step 202 is not limited, and step 204 may occur after, before, or simultaneously with step 202. In some non-limiting embodiments, controller 102 may measure a voltage across a capacitor of input port 112 to provide the input voltage measurement. In some non-limiting embodiments, controller 102 may receive data associated with voltage. For example, controller 102 may receive an input voltage measurement (e.g., data associated with measurement of a voltage, for example, an electrical potential) at input port 112 of electrical system 100. Controller 102 may receive the input voltage measurement from voltage sensor 108.

In some non-limiting embodiments, voltage sensor 108 may measure a voltage (e.g., an amount of voltage) at input port 112 of electrical system 100 and power module 104, voltage sensor 108 may provide data associated with the voltage to controller 102, and controller 102 may receive the data from voltage sensor 108. In some non-limiting embodiments, the voltage may be measured in units of volts (V), millivolts (mV), and/or the like. In some non-limiting embodiments, the data associated with voltage may include measurement of voltage (e.g., a real-time value of voltage) as a continuous signal, a discrete (e.g., sample-wise time dependent) signal, and/or the like. In some non-limiting embodiments, the voltage may include an AC voltage, and the data associated with voltage may include a waveform (e.g., a sinusoidal waveform) associated with the AC voltage. In some non-limiting embodiments, the data associated with voltage may include other information, such as a magnitude, polarity of the voltage. In some non-limiting embodiments, controller 102 may receive data associated with measurement of a voltage across a component of input port 112 (e.g., an electrical component connected at input port 112). For example, controller 102 may receive data associated with measurement of a voltage across a capacitor positioned at input port 112 of electrical system 100.

As shown in FIG. 2, at step 206, process 200 includes generating a level signal (e.g., a power signal or saturation signal). For example, controller 102 may generate a power signal based on the input current measurement and the input voltage measurement. In some non-limiting embodiments, controller 102 may perform an operation on the input current measurement (e.g., data associated with current) and the input voltage measurement (e.g., data associated with voltage). For example, controller 102 may perform an operation (e.g., a mathematical operation) on data associated with current and data associated with voltage to provide a result in the form of a power signal. In some non-limiting embodiments, controller 102 may multiply the data associated with current and the data associated with voltage to provide the power signal (e.g., the power signal as a product of a multiplication operation) in the form of a value of power (e.g., in units of watts (W)).

In some non-limiting embodiments, the data associated with current, and the data associated with voltage are multiplied in a sample-wise manner to obtain a power signal. For example, a discrete sample (e.g., obtained via an analog-to-digital converter (ADC) processing) of voltage value may be multiplied by a discrete sample (e.g., obtained via an ADC processing) of current to obtain a power value. Thus, when done in a sample-wise manner, a stream of voltage and current samples may be converted to a stream of power values forming the power signal. In some non-limiting embodiments, the power signal may be a time-dependent signal which is obtained by multiplying real-time or near-real time values of voltage and current (e.g., in a sample-wise manner). Additionally, or alternatively to mathematical operation as described above, in some non-limiting embodiments, a saturation signal may be generated in response to a saturation of the controller 102. For example, the system 100 may include means for detecting saturation of the controller 102 (e.g., output of the controller 102) to generate the saturation signal, (e.g., provided as, or a part of, the level signal).

Monitoring the level signal (e.g., monitoring the power signal and/or the saturation signal) can provide information about flow of current and/or power between the input port and the rechargeable energy storage element, e.g., whether flow of power and/or current is in a desired or undesired state relative to the target charging operation. For example, if, over a half or full cycle (e.g., 10 ms or 20 ms, respectively, for a 50 Hz cycle), there is no positive power value detected, this may be indicative of a situation in which only active power with a negative direction (e.g, energy is supplied from the electrical system 100 to an external source) exists. In that example, the negative power signal may indicate that current is flowing in an incorrect (e.g., an undesired) path in electrical system 100 (e.g., the result may indicate a disrupted connection between an external power source and electrical system 100 such that current is not being provided by external power source). In another example, if over the period there is no negative power value detected (e.g., power values are at or above zero), this may be indicative of a situation in which only active power with a positive direction (e.g., energy is supplied from the external source to the electrical system 100) exists. This situation is indicative of active charging of the rechargeable energy storage elements and can correspond to current flowing in a correct (e.g., desired) path in electrical system 100 (e.g., the result may indicate a proper connection between the electrical system 100 and an external power source such that current is provided by external power source). By way of further example, if, over this period, the mean power value is at or near zero, this may be indicative of a situation in which only reactive power exists, such that all energy that flows out of electrical system 100 returns, which could be caused by a disrupted or non-existent external connection at input port 112 together with a permanent charge/discharge of a capacitor located near input.

In some non-limiting embodiments, controller 102 may apply a charging control waveform via a rechargeable energy storage element (e.g., a rechargeable energy storage element of energy storage modules 101 of power module 104). For example, controller 102 may apply a charging control waveform at input port 112 (e.g., an input port circuit) that causes the rechargeable energy storage element to be charged in a current controlled manner (e.g., a controlled manner with regard to a current applied to the rechargeable energy storage element).

In some non-limiting embodiments, the charging control waveform is such that it causes a charging current which allows the one or more rechargeable energy storage elements in one or more of energy storage modules 101 to be charged in a controlled manner. It shall be appreciated that the charging control waveform may be generated using energy from energy storage modules 101. Thus, at least some of energy storage modules 101 have accumulated energy (e.g., an electrical charge), which may be sufficient to generate the charging control waveform. In some non-limiting embodiments, an electrical system acts as a controlled current sink with a waveform (e.g., current waveform) synchronized to a waveform of the external power source. In some non-limiting embodiments, the charging control waveform may be based on the input voltage measurement and/or the input current measurement. In some non-limiting embodiments, controller 102 may generate the charging control waveform based on the voltage at the input port circuit (e.g., an input voltage measurement from voltage sensor 108). In some non-limiting embodiments, controller 102 may generate the charging control waveform, such that the charging control waveform is time synchronized with a voltage waveform measured at input port 112.

In some non-limiting embodiments, a charging current may be defined by a voltage difference between a voltage from the external power source and the charging control waveform. For example, the voltage difference is applied across an impedant component, preferably an inductor to generate the charging current (or input current). To regulate the charging current, the voltage difference may be set by controller 102 (e.g., by measuring the input current). To do so, a feed forward path is provided (e.g., as part of a control loop) to controller 102 and controller 102 does not need to determine a voltage from the external power source but instead, controller 102 may receive data associated with the input current. Thus, according to some non-limiting embodiments, the charging control waveform may be dependent upon the voltage measurement performed via voltage sensor 108. The charging control waveform may be dependent upon a charging source waveform from the external power source (e.g., a waveform, such as a voltage waveform, that is physically provided at input port 112 by the external power source to charge energy storage modules 101 of power module 104). Through the use of the charging control waveform, a charging current provided to power module 104 may be less dependent on (e.g., less susceptible to changes due to) variations from the external power source. This may be especially beneficial when the external power source provides AC power. By tracking the charging control waveform along a charging source waveform of the external power source, the charging current can be made more uniform and/or conditioned for recharging power module 104 (e.g., an energy storage element of energy storage modules 101 of power module 104). In some non-limiting embodiments, a charging current provided to power module 104 may be dependent (e.g., proportional) to a difference between a charging source waveform of the external power source (e.g., a voltage waveform of the external power source) and the charging control waveform (e.g., voltage component of the charging control waveform).

As shown in FIG. 2, at step 208, process 200 includes determining whether the power signal satisfies a threshold value. For example, controller 102 may determine whether the level signal (e.g., as the result of the operation performed on the input current measurement and the input voltage measurement (e.g., power signal) and/or saturation of the controller 102 (e.g., saturation signal)) satisfies a threshold value (e.g., a level value (e.g., a power value and/or a saturation value)). For example, for power value, the threshold value may include a value of power below zero, such as a value of power that has a negative sign (e.g., which indicates that there is outgoing power from input port 112). In some non-limiting examples, the threshold value may include a value in a range between -1 W and -1 0W, or in some cases higher than -10W (e.g., -20W, -30W, -40W, -50W or -100W). In one example, the threshold value may include a value of -1W. In some non-limiting examples, the threshold value may include a value which is significantly different from an expected charging power value (e.g., below the expected value). For example, the threshold value may be 10 W, e.g., for an expected charging power value of around 35 W or higher. In this way, the threshold value may be selected so that the threshold value does not provide too much sensitivity to a protection scheme of electrical system 100. In some non-limiting embodiments, output of controller 102 may be usable as, or indicative of, the power signal.

In some non-limiting embodiments, controller 102 may monitor the power signal with regard to the threshold value. For example, controller 102 may compare the power signal to the threshold value to determine whether the power signal satisfies the threshold value (e.g., the power signal does not violate the threshold value). In some non-limiting embodiments, controller 102 may monitor the power signal with regard to the threshold value (e.g., compare the power signal to the threshold value) at a predetermined time interval (e.g., a time interval in milliseconds, such as for example, 5 ms, 10 ms, 20 ms, etc.).

In some non-limiting embodiments, when a charging current that is applied to power module 104 diverges from nominal range (e.g., for certain time), controller 102 may act to compensate for the divergence by causing an increased voltage difference between a voltage measured at input port 112 and a voltage provided at input port 112 by power module 104. This increased voltage difference may manifest as saturation signal, which may be detected as a saturation of controller 102, independently or in combination with a measured power signal (e.g., using input current and input voltage). Additionally or alternatively, an output of controller 102 may be monitored with respect to a predetermined saturation threshold to determine if a corresponding saturation limit has been reached. For example, when the output of controller 102 satisfies (e.g., violates or exceeds) one or more predetermined threshold values, it may be determined that a corresponding saturation limit of controller 102 has been reached.

In some non-limiting embodiments, controller 102 may determine to perform an action (e.g., determine to cause generation of the charging control waveform to cease, determine to deactivate electrical system 100, etc.) based on determining whether the level signal (e.g., either the power signal, either the saturation signal, or both) satisfies the threshold value. In one example, controller 102 may compare the power signal to the threshold value and, if controller 102 determines that the power signal satisfies the threshold value (e.g., that the power signal has a negative value or that the power signal has a negative value that is equal to or less than, e.g., more negative than, the threshold value), controller 102 may determine to cause generation of the charging control waveform to cease. In such an example, controller 102 may compare the power signal of the operation to the threshold value and, if controller 102 determines that the power signal does not satisfy the threshold value (e.g., that the power signal has a positive value or that the power signal has a value that is equal to or greater than the threshold value), controller 102 may determine to forego causing generation of charging control waveform to cease and, thereby, allowing generation to continue.

In some non-limiting embodiments, controller 102 may determine whether the power signal satisfies the threshold value by providing the power signal as an input to a low pass filter and determining whether the power signal satisfies the threshold value based on an output of the low pass filter. For example, controller 102 may determine whether the power signal satisfies the threshold value by providing the power signal as an input to the low pass filter and comparing the output of the low pass filter to the threshold value. In such an example, if controller 102 determines that the output of the low pass filter satisfies the threshold value, controller 102 may determine to cause generation of a charging control waveform to cease. Further, if controller 102 determines that the output of the low pass filter does not satisfy the threshold value, controller 102 may determine to forego causing generation of the charging control waveform to cease.

In some non-limiting embodiments, the low pass filter includes a filter that is configured to filter the power signal based on a frequency of (e.g., a change of frequency of, a duration of a change of frequency of, etc.) the power signal. In some non-limiting embodiments, the frequency of the power signal may be based on a frequency of the current at input port 112, a frequency of the voltage at input port 112, or any combination thereof. In this way, by using a low pass filter, controller 102 may avoid causing generation of the charging control waveform to cease based on transient (e.g., short-term) changes in the voltage and/or current of electrical system 100.

In some non-limiting embodiments, controller 102 may perform a transformation operation on the power signal before providing the power signal as an input to the low pass filter. For example, controller 102 may convert any sample (e.g., a value of a measurement) of the power signal with an acceptable value (e.g., a value greater than zero and/or a value within expected range) to a sample having a value of zero. Accordingly, any input provided to the low pass filter will have non-zero values for the samples which have values outside a desired range. The rest of the samples will have a value of zero. By way of example, in the case where the power signal is positive (indicating the desired power direction and charging operation), the time-averaged, low-pass filtered power signal without transformation may be at a steady state value that is above zero, and significantly above zero, such as +1000 W. If, on the other hand, the threshold value for determining that the undesired state (e.g., negative power value) is a power value that is below zero, such as between -1 W and -10 W, the power signal may not immediately (or even quickly) change from the steady state positive value to the threshold value upon the input port 112 losing external power (e.g., upon a disconnection or unplugging event). The proposed transformation operation can shorten the time it takes for the threshold value to be reached upon the occurrence of such an event, pursuant to the transformation operation the filter is operable to replace the higher steady state value (e.g., +1000 W) with a predetermined value (e.g., a significantly lower than the higher steady state value, e.g., a value at or near 0 W). Accordingly, upon the occurrence of the disconnection or unplugging event, the threshold value can be reached more quickly as it need only move from 0 W to the threshold value.

As shown in FIG. 2, at step 210 (YES), process 200 includes causing a charging control waveform to cease. For example, controller 102 may cause generation of the charging control waveform to cease based on determining that the power signal satisfies the threshold value. In some non-limiting embodiments, controller 102 may cause generation of the charging control waveform (e.g., a voltage waveform and/or a current waveform) to cease based on determining that the power signal satisfies the threshold value. For example, controller 102 may cause one or more switches (e.g., internal relays, switching elements, etc.) of electrical system 100 to open and/or controller 102 may cause one or more switching elements of one or more energy storage modules 101 to open (e.g., to enter a high impedance state). In some non-limiting embodiments, controller 102 may activate a switch element that disconnects (e.g., electrically isolates) input port 112 of electrical system 100 from power module 104.

In some non-limiting embodiments, controller 102 may stop applying (e.g., application of) the charging control waveform. For example, controller 102 may stop application of the charging control waveform at input port 112 based on determining that the power signal satisfies the threshold value. In some non-limiting embodiments, controller 102 may stop a current waveform and/or a voltage waveform that is used for charging from being applied to power module 104 via input port 112. For example, controller 102 may operate a switch to isolate input port 112 and prevent the current waveform and/or the voltage waveform that is used for charging from being applied to power module 104.

In some non-limiting embodiments, controller 102 may cause generation of current and/or voltage within electrical system 100 to cease by operating (e.g., opening or closing) one or more switches within electrical system 100 to isolate (e.g., electrically isolate) one or more components of electrical system 100. For example, controller 102 may cause generation of current and/or voltage within electrical system 100 to cease by operating one or more switches to isolate power module 104 and/or waveform generator 110 within electrical system 100. In this way, controller 102 may prevent a voltage from being present at input port 112 and/or prevent a current from flowing out of input port 112 (e.g., prevent a current from backfeeding a load at input port 112). It shall be appreciated that the switches may be operated via the saturation signal as well (e.g., using the level signal), either independently or in combination with the power signal.

In some non-limiting embodiments, controller 102 may operate (e.g., open or close) one or more switches within electrical system 100 to isolate (e.g., electrically isolate) one or more components of electrical system 100. For example, controller 102 may operate one or more switches to isolate power module 104 and/or waveform generator 110 within electrical system 100. In this way, controller 102 may prevent a voltage from being present at input port 112 and/or prevent a current from flowing out of input port 112 (e.g., prevent a current from backfeeding a load at input port 112).

In some non-limiting embodiments, controller 102 may deactivate electrical system 100 based on determining that the power signal satisfies the threshold value. For example, controller 102 may deactivate electrical system 100 by deactivating (e.g., shutting down) waveform generator 110. Additionally or alternatively, controller 102 may deactivate electrical system 100 by discharging energy storage modules 101 and/or other components (e.g., electrical components that store electricity, such as a capacitor) of electrical system 100. In this way, controller 102 may further prevent a voltage from being present at input port 112 and/or prevent a current from flowing out of input port 112.

In this way, embodiments of the present disclosure can help alleviate a situation in which the charging control waveform is continued to be applied at input port 112 after input port 112 loses incoming power from the external power source. Monitoring of the level signal (e.g., the power signal and/or the saturation signal) can be used to determine when to stop applying the charging control waveform at the input port 112. For example, in situations in which the charging control waveform begins to provide power at input port 112 (e.g., electrical current that may flow outward from input port 112 in contrast to the intended configuration of input port 112), the power signal may satisfy (e.g., violate) a threshold value which will cause electrical system 100 to stop applying the charging control waveform and/or to cease operation altogether. It shall be appreciated that the charging control waveform may be dependent on a waveform of the external power source. Thus, the charging control waveform may change dependent upon whether the external power source is active or not. For example, when the external power source is disconnected, the charging control waveform may change (e.g, increase its voltage) in response to controller 102 attempting to control (e.g., maintain) a charging current applied to power module 104 (e.g., to one or more energy storage modules 101 of power module 104). At least in some cases, this change in the charging control waveform may continue for at least some amount of time, thereby causing a risk that the charging control waveform acts as a source of electrical power and energizes input port 112 in a hazardous manner. Therefore, the present disclosure provides a solution that may reduce or eliminate the risk of electrical shock and/or injury to an individual caused by the charging control waveform providing electrical power at input port 112.

As shown in FIG. 2, at step 212 (NO), process 200 includes foregoing causing the charging control waveform to cease. For example, controller 102 may forego causing the charging control waveform to cease based on determining that the power signal does not satisfy the threshold value (e.g., the threshold value with regard to phase). Once process 200 reaches step 210 or 212, process 200 can repeat, and can do so indefinitely so long as electrical system 100 is operational. Alternatively, process 200 can cease after, for example, step 210, and may resume at a later time, such as once the waveform generation resumes.

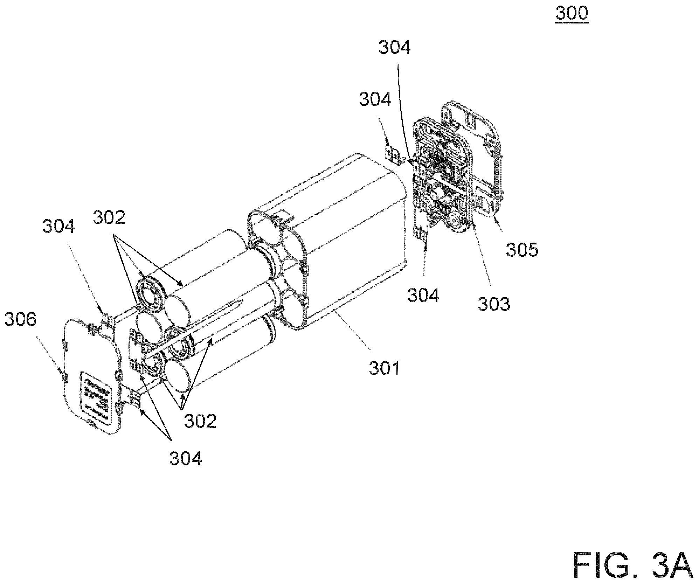

Referring now to FIG. 3A, FIG. 3A is a schematic diagram of a non-limiting embodiment of energy storage module 300. In some non-limiting embodiments, energy storage module 300 may be the same as or similar to energy storage module 101. As shown in FIG. 3A, energy storage module 300 may include housing 301, at least one energy storage component 302, module controller 303, connectors 304, top cover 305, and bottom cover 306. The number and arrangement of components shown are provided as an example. In some non-limiting embodiments, energy storage module 300 may include additional components, fewer components, different components, or differently arranged components than those shown. Additionally or alternatively, a set of components (e.g., one or more components) of energy storage module 300 may perform one or more functions described as being performed by another set of components of energy storage module 300. In some non-limiting embodiments, module controller 303 may be the same as or similar to controller 102. In some non-limiting embodiments, housing 301 may include plastic, metal, any combination thereof, and/or the like. For example, housing 301 may include a plastic housing.

In some non-limiting embodiments, housing 301 may be configured to hold at least one (e.g., a plurality of) energy storage components 302. For example, as shown in FIG. 3A, housing 301 may be shaped to have six energy storage components 302 uniformly distributed in an interior space defined by housing 301.

In some non-limiting embodiments, each energy storage component 302 may include a rechargeable energy storage element, such as at least one of a battery, a rechargeable battery (e.g., a lithium-ion battery), a cell (e.g., battery cell, an electrochemical cell, and/or the like), a rechargeable cell, a capacitor, an ultra-capacitor, any combination thereof, and/or the like. For example, as shown in FIG. 3A, each energy storage component 302 may include a cylindrical cell (e.g., lithium-ion battery cell). These energy storage elements may be the same as energy storage elements referred to above with reference to FIG. 1.

In some non-limiting embodiments, module controller 303 may include a controller and associated circuitry. For example, module controller 303 may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function.

In some non-limiting embodiments, connectors 304 may connect the terminals (e.g., ends) of each energy storage component 302 to module controller 303. Additionally or alternatively, one or more connectors 304 may connect at least one terminal (e.g., end) of one energy storage component 302 to another terminal of another energy storage component 302. For example, connectors 304 may include a conductive (e.g., electrically conductive) material, such as metal and/or the like.

In some non-limiting embodiments, each of top cover 305 and bottom cover 306 may include plastic, metal, any combination thereof, and/or the like. For example, each of top cover 305 and bottom cover 306 may include a plastic cover. In some non-limiting embodiments, top cover 305 and bottom cover 306 may be configured to (e.g., sized and shaped to) cover openings at top and bottom ends, respectively, of housing 301. In some non-limiting embodiments, top cover 305 may include a first electrical connection (e.g., S1, as described herein), a second electrical connection (e.g., S2, as described herein), and/or at least one communication connection, as described herein. For example, these connections may allow for electrical and/or communicative connection between module controller 303 and external components (e.g., other components of the electrical system external to the energy storage module housing).

In some non-limiting embodiments, energy storage module 300 may include a battery module. For example, the battery module may include at least one cell (e.g., a battery cell, such as a rechargeable battery cell). For the purpose of illustration, as shown in FIG. 3A, the battery module may include six cells (e.g., rechargeable battery cells, such as lithium-ion cells and/or the like).

In some non-limiting embodiments, energy storage components 302 (e.g., battery cells) of energy storage module 300 may be connected in series. In some non-limiting embodiments, energy storage components 302 (e.g., battery cells) of energy storage module 300 may be connected in parallel.

In some non-limiting embodiments, at least some (e.g., a subset of) energy storage components 302 may be connected in series, for example, so that the combined (e.g., summed and/or the like) voltage of the series-connected components satisfies (e.g., equals, exceeds, and/or the like) the target (e.g., desired) operating voltage of energy storage module 300. In some non-limiting embodiments, at least some (e.g., a subset of) energy storage components 302 may be connected in parallel, for example, so that the combined (e.g., summed and/or the like) voltage of the parallel-connected components satisfies (e.g., equals, exceeds, and/or the like) the target (e.g., desired) operating current of energy storage module 300. For example, energy storage module 300 may include a plurality of subsets of energy storage components 302, such that energy storage components 302 of each subset are connected in series (e.g., to combine to output the desired module voltage), and the subsets may be connected in parallel (e.g., to combine to output the desired module current).

In some non-limiting embodiments, energy storage module 300 may be the same as or similar to or include at least some components that are the same as or similar to the battery modules described in at least one of United States Patent Application Publication No. 2022/0037891, United States Patent Application Publication No. 2022/0247030, United States Patent Application Publication No. 2022/0359918, United States Patent Application Publication No. 2022/0360094, and/or United States Provisional Patent Application No. 63/556,996, the disclosures of each of which are hereby incorporated by reference in their entireties.

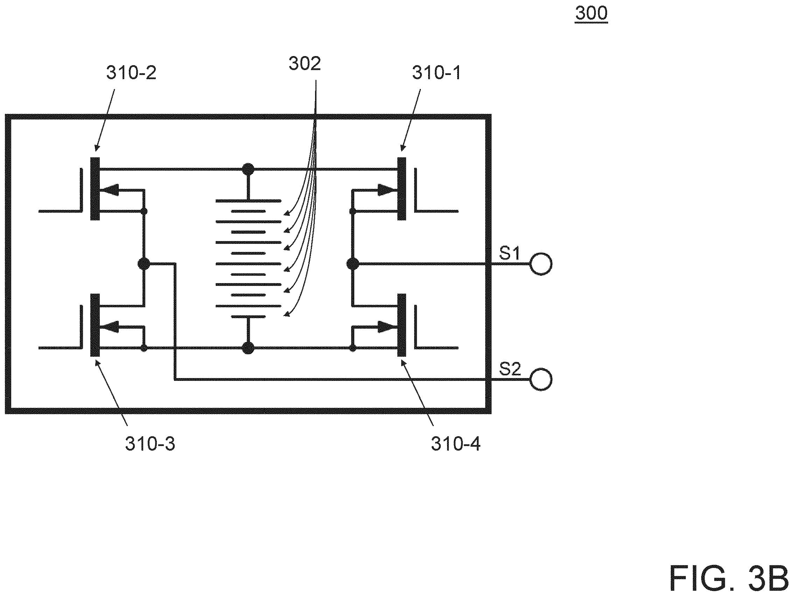

Referring now to FIG. 3B, FIG. 3B is a circuit diagram of energy storage module 300, according to some non-limiting embodiments. In some non-limiting embodiments, as shown in FIG. 3B, energy storage module 300 may include energy storage components 302, at least one switching element (e.g., first switching element 310-1, second switching element 310-2, third switching element 310-3, and/or fourth switching element 310-4, collectively referred to as "switching elements 310," and individually referred to as "switching element 310"), first electrical connection S1, and second electrical connection S2. In some non-limiting embodiments, switching elements 310 may be part of (e.g., integrated on, connected to, and/or the like) module controller 303. In some non-limiting embodiments, first electrical connection S1 and/or second electrical connection S2 may be part of (e.g., integrated on, connected to, and/or the like) module controller 303 and/or may extend through top cover 305. The number and arrangement of components shown are provided as an example. In some non-limiting embodiments, energy storage module 300 may include additional components, fewer components, different components, or differently arranged components than those shown. Additionally or alternatively, a set of components (e.g., one or more components) of energy storage module 300 may perform one or more functions described as being performed by another set of components of energy storage module 300.

As shown in FIG. 3B, energy storage module 300 may include six energy storage components 302 (e.g., rechargeable battery cells and/or the like) connected in series. In some non-limiting embodiments, energy storage components 302 may be in other arrangements and/or have other connections, as described herein.

In some non-limiting embodiments, switching elements 310 may be switched (e.g., opened, closed, activated, deactivated, and/or the like) to selectively connect energy storage component(s) 302 to first electrical connection S1 and/or second electrical connection S2, e.g., to control a module voltage across first electrical connection S1 and second electrical connection S2. For example, switching elements 310 may be switched so that (1) first electrical connection S1 and second electrical connection S2 are both connected to the negative side (e.g., DC minus) of energy storage component(s) 302, (2) first electrical connection S1 is connected to the negative side (e.g., DC minus) of energy storage component(s) 302 and second electrical connection S2 is connected to the positive side (e.g., DC plus) of energy storage component(s) 302, or (3) first electrical connection S1 is connected to the positive side (e.g., DC plus) of energy storage component(s) 302 and second electrical connection S2 is connected to the negative side (e.g., DC minus) of energy storage component(s) 302. As such, the voltage across first electrical connection S1 and second electrical connection S2 may be zero, negative, or positive, respectively.

For the purpose of illustration by way of a few examples, to connect both first electrical connection S1 and second electrical connection S2 to the negative side (e.g., DC minus) of energy storage component(s) 302, fourth switching element 310-4 and third switching element 310-3 may both be activated (e.g., closed, set to act as a closed switch, and/or the like), while second switching element 310-2 and first switching element 310-1 are deactivated (e.g., open, set to act as an open switch, and/or the like). To connect first electrical connection S1 to the negative side (e.g., DC minus) and connect second electrical connection S2 to the positive side (e.g., DC plus) of energy storage component(s) 302, fourth switching element 310-4 and second switching element 310-2 may be activated, while third switching element 310-3 and first switching element 310-1 are deactivated. To connect first electrical connection S1 to the positive side (e.g., DC plus) and second electrical connection S2 to the negative side (e.g., DC minus) of energy storage component(s) 302, first switching element 310-1 and third switching element 310-3 may be activated, and fourth switching element 310-4 and second switching element 310-2 may be deactivated. In some non-limiting embodiments or aspects, switching elements 310 may be operated to be in states, such as: a high-impedance (Hi-Z) state (e.g., in which all of switching elements 310 are deactivated), a bypass state (e.g., in which low-side switching elements 310-3 and 310-4 are activated, while high-side switching elements 310-1 and 310-2 are deactivated), and two polarity states (e.g., in which energy storage component(s) 302 are connected between first electrical connection S1 and second electrical connection S2 in opposite polarity manner).

In some non-limiting embodiments or aspects, each switching element 310 may include at least one of a transistor (e.g., bipolar transistor, field-effect transistor (FET), metal-oxide-semiconductor field-effect transistor (MOSFET), and/or the like), a switch, a contactor, any combination thereof, and/or the like. In some non-limiting embodiments or aspects, energy storage module 300 may include one or more driver circuits, such as a gate driver circuit, for driving each switching element 310. For example, the driver circuits may be part of (e.g., integrated on, connected to, and/or the like) module controller 303.

In some non-limiting embodiments or aspects, each switching element 310 may be driven, or controlled, via module controller 303. For example, module controller 303 may control switching elements 310 to selectively connect energy storage component(s) 302 to first electrical connection S1 and/or second electrical connection S2, as described herein. For example, module controller 303 may be connected to each switching element 310 in order to drive, or optionally control, such switching element 310. In some non-limiting embodiments or aspects, module controller 303 provides signals to the gate driver circuit for driving switching elements 310.

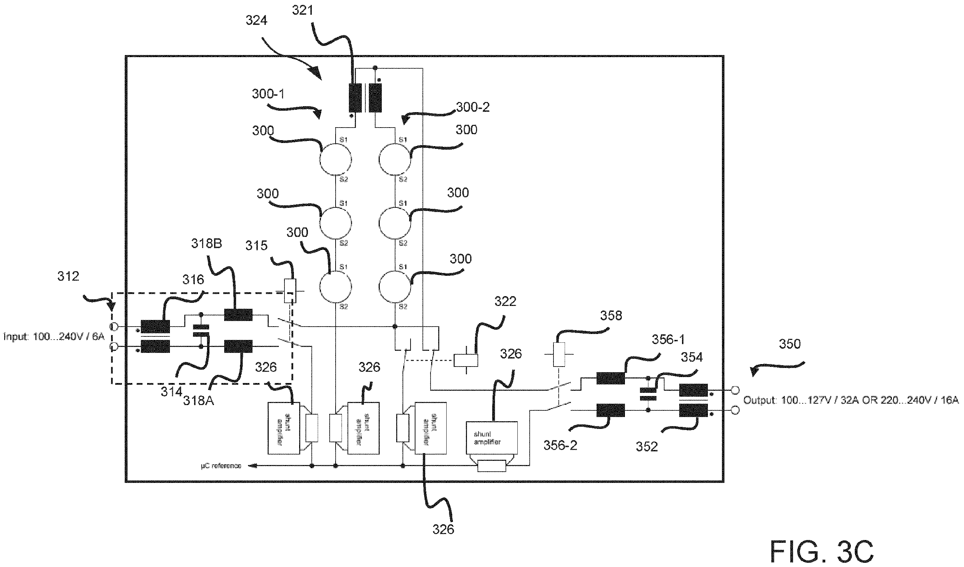

Referring now to Fig. 3C, shown is a circuit diagram of an example power module 324 and associated circuitry, according to some non-limiting embodiments or aspects. The number and arrangement of components shown are provided as an example.

In some non-limiting embodiments or aspects, as shown in Fig. 3C, input port circuit 312 may include input choke 316. Input choke 316 may be connected to input capacitor 314 and/or at least one input inductor (e.g., first input inductor 318A and/or second input inductor 318B, collectively referred to as "input inductors 318," and individually referred to as "input inductor 318"). For example, input choke 316 may be provided for electromagnetic compatibility (EMC) reasons. Similarly, input capacitor 314 may be provided as an EMC capacitor (and/or class-X capacitor), which may stabilize the input voltage and/or make the input less impedant at higher frequencies. For example, input inductor(s) 318 may be used to operate the power module 324 in a controlled current mode.

In some non-limiting embodiments or aspects, output connection 350 may be connected to output choke 352. Output choke 352 may be connected to at least one of capacitor 354 and/or inductors 356-1 and 356-2.

**In** some non-limiting embodiments or aspects, each of the chokes (e.g., input choke 316 and/or output choke 352) may be common-mode chokes and/or the like, e.g., used for EMC performance. It shall be appreciated that further discussion of EMC inductors or capacitors is not essential to the scope or generality of the present teachings.

In some non-limiting embodiments or aspects, input switch 315 may selectively connect and/or disconnect input port circuit 312 from first set 300-1 and second set 300-2 of energy storage modules 300. In some non-limiting embodiments or aspects, to operate in a charging mode of operation input switch 315 at input port circuit 312 may be switched to a first state (e.g., closed, activated, and/or the like). For example, switching input switch 315 to the first state (e.g., closed, activated, and/or the like) may allow current to flow from input port circuit 312 to first set 300-1 and second set 300-2 of energy storage modules 300 (e.g., to charge energy storage modules 300). In some non-limiting embodiments or aspects, a power source (e.g., mains electric power, generator power, renewable power (e.g., solar, wind, and/or the like), and/or the like) may be connected to input port circuit 312. In some non-limiting embodiments or aspects, controller 102 may control module controllers of energy storage modules 300 to charge energy storage elements thereof (e.g., based on power from the power source).

In some non-limiting embodiments or aspects, to prevent current from flowing to or from input port circuit 312, input switch 315 may be switched to a second state (e.g., open, deactivated, and/or the like).

In some non-limiting embodiments or aspects, at least one output switching element (e.g., output switch 358) may selectively connect and/or disconnect output 350 from energy storage modules 300.

In some non-limiting embodiments or aspects, output switch 358 may be switched to a first state (e.g., closed, activated and/or the like) to allow current to flow from first set 300-1 and second set 300-2 of energy storage modules 300 to output connection 350 (e.g., to supply power to a load connected to output connection 350). In some non-limiting embodiments or aspects, to prevent current from flowing to output connection 350, output switch 358 may be switched to a second state (e.g., opened, deactivated and/or the like).

In some non-limiting embodiments or aspects, switch 322 (e.g., voltage selection switch) may be configured to switch between a first state and a second state. For example, upon switching of switch 322 to the first state (e.g., a closed state, an activated state, and/or the like), first set 300-1 of energy storage modules 300 may be connected in parallel with second set 300-2 of energy storage modules 300 to provide a first output voltage. Additionally or alternatively, upon switching of switch 322 to the second state (e.g., open state, deactivated state, and/or the like), first set 300-1 of energy storage modules 300 may be connected in series with second set 300-2 of energy storage modules 300 to provide a second output voltage (e.g., a higher voltage than first output voltage).

In some non-limiting embodiments, the power module 324 may be used to provide multi-voltage operation. For example, as described above, in a first mode of operation (e.g., corresponding to the first state of switch 322), the first set 300-1 and second set 300-2 of energy storage modules 300 may be connected in parallel, while in a second mode of operation (e.g., corresponding to the second state of switch 322), the first set 300-1 and second set 300-2 of energy storage modules 300 may be connected in series. It shall be appreciated that the first mode of operation may be provide an output voltage which is lower than the output voltage provided in the second mode of operation, however the output current provided in the first mode of operation may be larger than the output current provided in the second mode of operation. For example, the first mode of operation may provide a 110 V output, while the second mode of operation provides a 220 V output. This can advantageously allow for multi-voltage domain operation. For example, 110 V AC mains voltage domain is predominantly used in the US, while 220 V AC mains voltage domain is used in Europe. The power module 324 can thus allow flexibility in using electrical appliances rated for any of the voltage domains. A particular advantage of the shown configuration can be that output power can be similar or identical in either mode. For example, assuming identical sets (300-1 and 300-2) operating identically, output current in the first mode can be double of the output current in the second mode even though the output voltage in the first mode is half of the output voltage in the second mode. This can allow similar power levels to be used despite the voltage domain which the power module 324 output is operating in. The examples of 110 V and 220 V are non-limiting to the teachings as any voltage domain, or operating frequency can be realized with the present structure. Moreover, it is not limiting to have the two domains which are related by an integer factor to each other in terms of voltage and/or current. It shall be appreciated the operating cycle (e.g., order of plurality of modules) can be adapted according to the operating mode of the power module 324.

In some non-limiting embodiments or aspects, each of input switch 315, switch 322, and output switch 358 may include at least one of a switch, a contactor, a transistor, any combination thereof, and/or the like. For example, each of input switch 315, switch 322, and output switch 358 may include at least one of an SPST switch, a DPDT switch, an SPDT switch, a DPST switch, any combination thereof, and/or the like. For example, each of input switch 315, switch 322, and output switch 358 may include at least one of a DPDT switch or a DPST switch. For the purpose of illustration, as shown in Fig. 3C, each of input switch 315, switch 322, and output switch 358 may include a DPST switch or a DPDT switch.

In some non-limiting embodiments or aspects, power module 324 may include current sensors 326, which may be in communication with controller 102 (e.g., a microcontroller). In some non-limiting embodiments or aspects, each current sensor 326 may include a shunt amplifier. For example, each shunt amplifier may refer to a common potential (e.g., reference voltage), to which PU controller 102 (e.g., a microcontroller) also may refer. In some non-limiting embodiments or aspects, at least some (e.g., all, a subset, and/or the like) of current sensors 326 may be any other suitable type of current sensor. For example, a current sensor 326 may include measuring voltage drop across a resistor connected in series (e.g., to at least one of 300-1 and/or second set 300-2 of energy storage modules 300), e.g., to measure the current flowing through the resistor (and/or any component in series with the resistor). In some non-limiting embodiments or aspects, at least one current sensor 326 may be of a different type than another current sensor 326. For example, a current sensor 326 connected to of 300-1 of energy storage modules 300 may be of a different type than another current sensor 326 connected to second set 300-2 of energy storage modules 300.

In some non-limiting embodiments or aspects, by measuring current at locations of current sensors 326, the following may be measured: output current (e.g., in a redundant manner), input current (e.g., in a redundant manner), circular current (e.g., if strings are connected in parallel). In some non-limiting embodiments or aspects, current sensors may measure current flowing through each of first set 300-1 and second set 300-2 of energy storage modules 300. As such, relative measurements may be performed to detect if a circular (e.g., loop) current is flowing between first set 300-1 and second set 300-2 of energy storage modules 300. In other words, such relative measurements may be used to detect that the load current is divided evenly between the sets. Such measurements also may be used for orchestrating the operation of energy storage modules 300, e.g., in such a manner that the circular (e.g., loop) current may be reduced (e.g., eliminated). Additionally or alternatively, such orchestration may also include disabling certain energy storage modules 300 in any of sets 300-1 and 300-2, even if such disabling causes an unequal number of active energy storage modules 300 between the sets 300-1 and 300-2. This may help running the power module 324, for example, even if energy storage modules 300 between sets 300-1 and 300-2 have different charge levels. Additionally or alternatively, such orchestration may include first module voltages of first set 300-1 being interleaved with second module voltages of second set 300-2. Interleaving of the module voltages can be done by phase shifting output voltage of one set with respect to the output of the other set. Additionally or alternatively, such orchestration may include tolerating, or even in some non-limiting embodiments or aspects, creating, an imbalance in voltages between the first set 300-1 and the second set 300-2. This may result in the loop current which tends to flow from one set 300-1 to the other set 300-2 to be a low frequency current which can be used, e.g., to equalize state of charge between the two sets 300-1 and 300-2. Choke 321 even in such non-limiting embodiments or aspects, may block the high frequency currents, but may allow low frequency or DC current to flow from the set 300-1 having a higher voltage than the other set 300-2. As such, power module 324 may be more robust, flexible, and balanced. In some non-limiting embodiments or aspects, current sensors 326 may be leveraged for making absolute measurements, such as determining total current flowing through first set 300-1 and/or second set 300-2 of energy storage modules 300. It shall be appreciated that said imbalance may be caused by unequal number of energy storage modules 300 operating in one set 300-1 as compared to the number of energy storage modules 300 operating in the other set 300-2. Additionally or alternatively, the imbalance may be due to unequal charge level between the two sets 300-1 and 300-2.

In some non-limiting embodiments or aspects, choke 321 may be connected to first set of energy storage modules 300-1 and second set of energy storage modules 300-2. For example, choke 321 may be connected to first electrical connection S1 of one energy storage module 300 of the first set and to first electrical connection S1 of one energy storage module 300 of the second set.

In some non-limiting embodiments or aspects, choke 321 may include a first winding (e.g., a first inductor), a second winding (e.g., a second inductor), and a core (e.g., a toroidal core). In some non-limiting embodiments or aspects, the first winding of choke 321 may be connected to the first set (e.g., the left-hand side) of energy storage modules 300-1. Additionally or alternatively, the second winding of choke 321 may be connected to the second set (e.g., the right-hand side) of energy storage modules 300-2. In some non-limiting embodiments or aspects, choke 321 may be in the form of a center-tapped inductor. For example, choke 321 may include a connection, such that the choke is between the first set and the second set of energy storage modules 300 when the first set and the second set are in series.

Choke 321 may be configured such that there is reduced (e.g., little or no) inductive impedance to load currents through the first and second sets of energy storage modules 300, and thus no, or significantly reduced, impedance to the combined load current (e.g., the total load current). For example, a first magnetic flux of the first winding caused by a first load current through a first set of energy storage modules 300 may combine subtractively with a second magnetic flux of the second winding caused by a second load current through a second set of energy storage modules 300. It shall be appreciated that the total load current in this case may be a combination (e.g., sum) of the first load current and the second load current.

Additionally, choke 321 may impede a loop (e.g., circular) current which may sometimes flow between the first and second sets of energy storage modules 300. Such a loop current may arise, e.g., from a mismatch between the first and second sets of energy storage modules 300. For example, due to a mismatch between energy storage modules 300 of the two sets, a loop current may tend to flow between the first set and the second set, and the direction of the flow of the loop current may depend upon the relative mismatch between the first and second sets. In other words, it may happen that one of the two sets of energy storage modules 300 is generating slightly higher voltage than the other and/or slightly higher current than the other. In such cases, a loop current (e.g., proportional to this voltage difference and/or current different) may tend to flow from the set producing a higher voltage and/or current towards the other set producing a lower voltage and/or current. Choke 321 may impede such loop current by reacting to the difference in current (e.g., caused by a difference of voltages) between the first set and the second set. Thus, the combined load current can flow essentially inductively unimpeded through choke 321, while the loop current is inductively impeded.

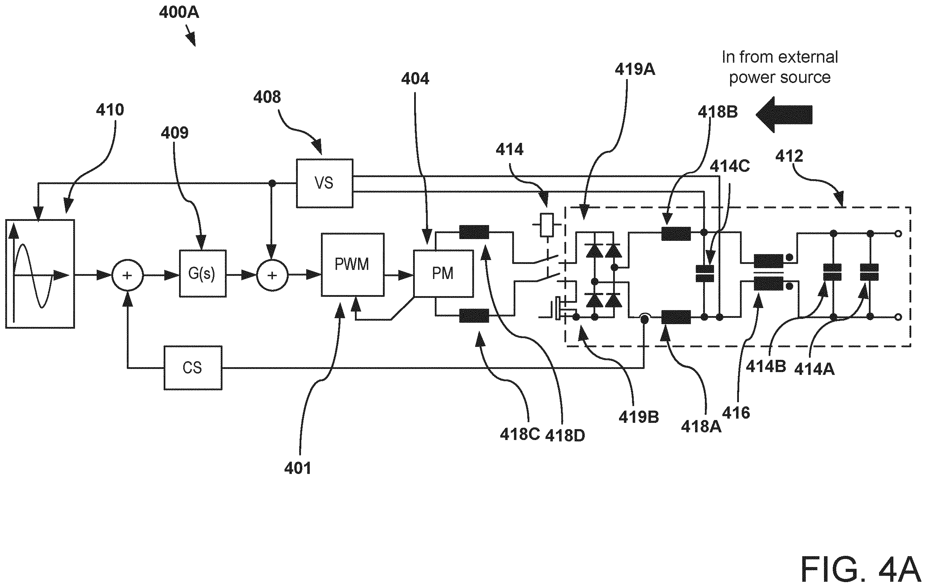

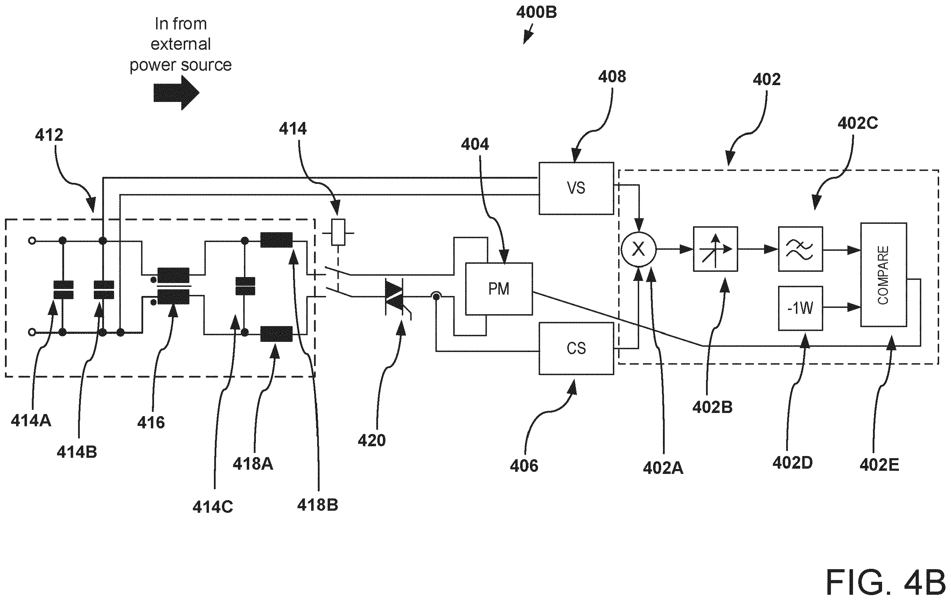

Referring now to FIGS. 4A-4B, FIGS. 4A-4B are diagrams of an overview of an implementation of electrical systems 400A and 400B. For purposes of better illustrating the design and effect of exemplary backfeed protection schemes according to the present disclosure, electrical system 400A is depicted in FIG. 4A without the backfeed protection scheme that is shown in electrical system 400B depicted in FIG. 4B. As shown in FIG. 4B, and in some non-limiting embodiments, the combination of diode rectifier 419A and N-Channel Field Effect Transistor (N-FET) 419B may be replaced by triac circuit device 420, which may be configured to conduct current in both directions and reduces power losses as compared to diode rectifier 419A and N-FET 419B.

As shown the example shown in FIG. 4A, electrical system 400A may include pulse width modulator (PWM) 401, power module (PM) 404, current sensor (CS) 406, voltage sensor (VS) 408, control function (G(s)) 409, waveform generator 410, input port circuit 412, inductors 418A-D, capacitors 414A-B, and switch 414. In some non-limiting embodiments, PM 404 may be the same as or similar to power module 104 and/or power module 324. In some non-limiting embodiments, PM 404 may include multiple energy storage modules 300, including, for example, energy storage modules 300 connected in series or parallel. In some non-limiting embodiments, CS 406 may be the same as or similar to current sensor 106, and VS 408 may be the same as or similar to voltage sensor 108. In some non-limiting embodiments, waveform generator 410 may be the same as or similar to waveform generator 110. In some non-limiting embodiments, input port circuit 412 may be the same as or similar to input port 112 and input port circuit 312. In some non-input limiting embodiments, capacitor 414C may be the same or similar to capacitor 314, inductors 418A-B may be the same or similar to inductors 318A-B, and switch 414 may be the same or similar to switch 315.

In some non-limiting embodiments, PWM 401 may include one or more devices to control parameters for PM 404. PWM 401 may control power that is provided by PM 404. For example, in some non-limiting embodiments or aspects, a control unit, (e.g., controller 102, which e.g., may be included in PWM 401) may command PM 404 to cause a duty cycle of an output (e.g., output voltage) provided by the PM 404. In some non-limiting embodiments, the energy storage modules 101 may be part of the PM 404. For example, controller 102 may cause energy storage module(s) 101 (e.g., via module controller included in each ESM 101) to generate a respective duty cycle of a respective module voltage of each respective energy storage module 101 to generate an output voltage of the PM 404 based on a combination (e.g., sum and/or the like) of the respective module voltage of each respective energy storage module 101, as described herein. For example, by modulating the duty cycle differently for multiple energy storage module(s) 101 connected in series, a combined (e.g., summed) voltage may approximate (e.g., better approximate) an AC voltage waveform having a target amplitude and/or a target frequency, as described herein. In some non-limiting embodiments or aspects, the duty cycle of the respective module voltage may relate to a switched voltage scheme such as a pulse-width modulation type waveform. For example, PWM 401 (or controller 102) may command module controller(s) of energy storage modules 101 to switch their output voltage with certain frequency and/or duty-cycle. The exact number or range of the switching frequency is not essential to the scope or generality of the teachings of the present disclosure. As some non-limiting examples, the switching frequency of the system may be in the kHz range (1 kHz to 999 kHz). For example, the switching frequency and/or PWM frequency of the system (e.g., PM 404) may be between 40 kHz and 100 kHz. In some cases, the switching frequency and/or pulse-width modulation frequency of the system may be at or around 90 kHz. In some non-limiting embodiments or aspects, module output (e.g., of each ESM 101) may be switching (e.g., with pulse width modulation) at a frequency between 1.5 kHz to 7.5 kHz. For example, module output may be switching (e.g., PWM) at a frequency between 3.5 kHz to 4.5 kHz. As a further example, module output may be switching (e.g., with pulse width modulation) at a frequency at or around 3.75 kHz. As another example, module output may be switching (e.g., with pulse width modulation) at a frequency at or around 4 kHz. In some non-limiting embodiments or aspects, the switching frequency or with pulse width modulation frequency of the system (e.g., PM 404) may be proportional to a multiplication of the switching frequency and/or with pulse width modulation frequency of the energy storage module 101 and the number of energy storage modules 101. It shall be appreciated that duty cycle may be anywhere between 0% and 100%, e.g., depending on the time at which the respective energy storage modules 101 are being operated. For example, 0% duty cycle for a given energy storage module 101 may mean that the energy storage module 101 is instructed to be deactivated or in a bypass mode (energy storage module 101 not contributing to the output voltage, but still able to carry current), and 100% duty cycle may mean that that energy storage module 101 is instructed to be switched on or activated in a given polarity. For example, by sweeping the duty cycle of a given energy storage module 101 over time (e.g., between 0% and 100%), the effective output voltage of that energy storage module 101 can be more finely incremented or decremented between voltage steps associated with full switching between two consecutive energy storage modules 101. Various energy storage modules 101 may be orchestrated, e.g., by controller 102 (or any other control unit), to generate an output voltage based on a combination of the respective module voltage of each respective energy storage module 101, as described herein. In some non-limiting embodiments, PWM 401 may control the parameters of PM 404 (e.g., parameters of ESMs 101) based on data provided by CS 406 and/or VS 408, data provided by PM 404, and/or a charging control waveform provided by waveform generator 410.

Control function (G(s)) 409 may apply a transfer function to a difference between a desired current (e.g., a setpoint value of current provided by waveform generator 410) and the current measured by CS 406 and provide the difference as an error signal. Thus, in some non-limiting embodiments, a transfer function is applied to the error signal to generate a correction signal which is input to PWM 401 for controlling the PM 404. In some non-limiting embodiments, the control function G(s) 409 may be included in the controller 102, in software and/or hardware form.

In some non-limiting embodiments, PWM 401 may receive data associated with an energy storage element (e.g., data associated with a battery, e.g., battery voltage data) from PM 404 and a correction signal which comprises an output of control function G(s) 409. The output of control function 409 may be combined with a voltage measurement (e.g., a voltage measurement at input port circuit 412) from VS 408 and the combination may be received by PWM 401 as an input signal. The input signal may be interpreted by PWM 401 as a voltage signal.

Based on the data associated with an energy storage element, PWM 401 may control PM 404 (e.g., energy storage components of PM 404) so that the output voltage of PM 404 is such that it minimizes the error signal at the input of control function 409. For example, PWM 401 can, based on information regarding the voltages of ESM 404, control the power stages on the ESM 404 in a way that the actual output voltage of series-connected ESM 404 power stages more or less equals the voltage commanded by the input signal to the PWM 401.

In some non-limiting embodiments, switch 414 may include one or more devices capable of creating a disconnection in an electrical current path from input port circuit 412 to other components of electrical system 400A. For example, switch 414 may include a switch, a circuit breaker, such as a miniature circuit breaker (MCB), a relay, a solenoid, and/or other like devices. As further shown in FIG. 4A, input port circuit 412 may include diode rectifier circuit 419A that includes a plurality of diodes and N-FET 419B. In some non-limiting embodiments, rectifier circuit 419A and/or N-FET 419B may be designed to prevent switch 414 from opening (e.g., tripping) at the input to electrical system 400A from an external power source.

In the implementation shown in FIG. 4A, because of the plurality of diodes of rectifier circuit 419A, rectifier circuit 419A may create a great amount of heat, for which electrical system 400A may require cooling devices to compensate and/or may be an inefficient component (e.g., may be a component that absorbs a large amount of power) for feeding power into PM 404.

In the implementation shown in FIG. 4A, during a recharging procedure of electrical system 400A, to recharge PM 404 (e.g., one or more internal batteries) from a wall socket, electrical system 400A may act as a controlled current sink with a current (reference) waveform generated by waveform generator 410 that is synchronized to the AC voltage waveform that is supplied from the input (e.g., wall socket). In some non-limiting embodiments, this can be accomplished by applying, at the input via which PM 404 is charging, a charging control waveform that closely tracks an AC input signal received at input port circuit 412, as described above.

In some non-limiting embodiments, the recharging procedure may include at least two steps, using CS 406, VS 408, and/or a voltage generating inverter (e.g., inverter circuit 114). A first step can include reference waveform generation (RWG). This can include synchronizing a phase locked loop (PLL) to a voltage measured by VS 408 at input, such as across a capacitor of input port circuit 412, and generating, at an output of the PLL, a phase signal. A set point value for a current control loop can be calculated based on the phase signal. In some non-limiting embodiments, RWG may be used to determine the appropriate charging control waveform to apply. In a second step, a current control loop may be used to keep a measured input current identical (or at least close to) to the set point value. In some non-limiting embodiments, voltage feed-forward may be used in the current control loop, so that a voltage generated by waveform generator 410 is equal to the voltage measured at input port circuit 412 superimposed by the output of the current control loop. With this, the current control loop sets the voltage across inductors 418A and 418B in the charging path and, thereby, controls the current provided (e.g., flowing to) to PM 404. In some non-limiting embodiments, further details about the recharging procedure may be found in United States Patent Application Publication No. 2022/0360094.

In a scenario where the connection to the wall socket is disrupted (e.g. disrupted by a charging cord becoming unplugged and/or by switch 414 opening), VS 408 may not be able to detect that the connection is disrupted because electrical system 400A may produce an output voltage (e.g., via the charging control waveform) close to the input voltage measured by VS 408 in order to regulate the current provided to PM 404. Such a scenario can result in a dangerous situation. For example, after the charging cord may become unplugged from the wall socket, pins of a power plug may be accessible to a person. However, safety standards may require the voltage to be lower than a value considered safe (e.g., 60V) within a given amount of time (e.g., two seconds). Further, upon switch 414 opening, electrical system 400A may supply power to a faulty device (e.g., a load that includes a faulty device) that is connected (e.g., connected in parallel) to input port circuit 412 of electrical system 400A, which may have been the cause of switch 414 opening. Accordingly, it is important to stop generation of a voltage waveform by waveform generator 410 in electrical system 400A as soon as power is no longer being supplied by an external power source at input port circuit 412.

For example, when a charging cord of electrical system 400A becomes unplugged, there is no longer a closed circuit at input port circuit 412 and the input current of electrical system 400A drops to zero. A current controller (e.g., a current control loop that includes CS 406) may try to compensate for the drop by altering a voltage generated by a waveform generator of electrical system 400A. Assuming that an output of the current controller is clamped (e.g., clamped to 10V), the current controller may provide a command to cause the voltage of the voltage waveform to change by 10V in a first cycle. In a second cycle, this 10V change may be maintained by a voltage feed-forward path and the current controller may add another 10V change. In this way, the generated voltage waveform may ramp up or down in 10V steps until the voltage waveform may reach an absolute maximum (e.g., 520V for an electrical system with 144 cells, each at a nominal voltage of 3.6V). At some point in time, a sign of a set point value of the current controller may change (e.g., as there should be an AC waveform). Then the output of the current controller may be clamped (e.g., clamped to -10V) after some amount of settling time. The generated voltage may then again ramp down to -520V in this example. Assuming an execution rate of a current control algorithm of 1/100 kHz and the clamping of ±10V, a generated voltage waveform may ramp from -520V to 520V in 10ms. As a result, it is possible to end up with a 50Hz periodic voltage waveform with an amplitude of 520V. This generated voltage waveform may be measured by a PLL, which eventually keeps generating a valid phase output. The present teachings, via the level signal, can prevent such undesirable occurrences, e.g., that the input port 412 remains powered via the PM 404 after external power is disconnected.

As shown in FIG. 4B, electrical system 400B may include control circuit 402, PM 404, CS 406, VS 408, input port circuit 412, switch 414, and triac circuit device 420. As mentioned above, electrical system 400B differs from electrical system 400A at least because it includes backfeed protection in the form of control circuit 402. In some non-limiting embodiments, control circuit 402 may be the same as or similar to controller 102.

In some non-limiting embodiments, input port circuit 412 may include a plurality of electrical components for providing power and/or conditioning of power supplied at the input to electrical system 400B from an external power source. For example, as shown in FIG. 4B, input port circuit 412 may include capacitors 414A, 414B, and 414C, input choke 416, and inductors 418A and 418B. As further shown in FIG. 4B, capacitors 414A and 414B may be connected in parallel, and VS 408 may measure a voltage across capacitor 414B to provide data associated with voltage at input port circuit 412 of electrical system 400B. In some non-limiting embodiments, input choke 416 may be may be a common-mode choke and/or the like, e.g., used for electromagnetic compatibility reasons. As further shown in FIG. 4B, inductors 418A and 418B may be positioned at each end, respectively, of (e.g., connected to each terminal, respectively) capacitor 414C. As further shown in FIG. 4B, triac circuit device 420 may include a triode for alternating current (TRIAC) (e.g., a bidirectional triode thyristor or bilateral triode thyristor) to control a current flowing into PM 404. In this way, electrical system 400B may avoid issues associated with a rectifier circuit (e.g., rectifier circuit 419A), such as a need for cooling devices to compensate for heat produced, and electrical system 400B may be more efficient for feeding power into PM 404.

In some non-limiting embodiments, control circuit 402 may include a plurality of circuit components to provide backfeed protection to electrical system 400B. In some examples, control circuit 402 may perform one or more operations on data associated with current provided by CS 406 and data associated with voltage provided by VS 408 and may determine whether a power signal satisfies a threshold value (e.g., a threshold value with regard to a phase difference between the current and the voltage). As further shown in FIG. 4B, control circuit 402 may include power signal generation component 402A (which may, in some non-limiting embodiments, include or be control function similar to G(s) 409 of FIG. 4A), transformation circuitry component 402B, low pass filter component 402C, reference power component 402D, and comparator circuitry component 402E. In this way, control circuit 402 may provide for an effective backfeed protection scheme for electrical system 400B.

In some non-limiting embodiments, control circuit 402 may receive an input current measurement at input port circuit 412 (e.g., data associated with current measured between input port circuit 412 of electrical system 400B and PM 404) by CS 406 and an input voltage measurement (e.g., data associated with voltage measured across capacitor 414B) at input port circuit 412 by VS 408. In some non-limiting embodiments, control circuit 402 may, via power signal generation component 402A, generate a power signal based on the measured current and voltage at the input. In one non-limiting embodiment, the power signal may be generated by multiplying the input current measurement and the input voltage measurement to provide the power signal. In some non-limiting embodiments, control circuit 402 may receive measurement values of input voltage and current from VS 408 and CS 406, respectively, and multiply the measurement values of input voltage and current by each other. It is assumed, that if electrical system 400B draws power from an external power source, the power signal that results (e.g., the multiplication result) remains positive, which is true because a current waveform is time synchronized to a voltage waveform measured by VS 408.

In some non-limiting embodiments, control circuit 402 may perform a transformation operation, via transformation circuitry component 402B, on the power signal to convert or modify a power signal value so that the power signal can be easily monitored and/or evaluated. For example, transformation circuitry component 402B may convert (e.g., replace) any positive value of the power signal to a power signal having a value of zero.

In some non-limiting embodiments, control circuit 402 may provide an output of transformation circuitry component 402B to low pass filter component 402C and control circuit 402 may filter the power signal. In some non-limiting embodiments, low pass filter component 402C may include a filter that is configured to filter (e.g., attenuate) inputs. For example, higher frequency components of the input (e.g., the power signal) may be significantly attenuated by low pass filter component 402C, whereas lower frequency components pass with little or no attenuation. In some examples, the filter may be configured to filter the power signal based on a frequency of (e.g., a change of frequency of, a duration of a change of frequency of, etc.) the power signal.

In some non-limiting embodiments, control circuit 402 may provide the output of low pass filter component 402C as an input to comparator circuitry component 402E. In some non-limiting embodiments, comparator circuitry component 402E may include a circuit that compares an input to a threshold (e.g., a threshold value) and provides an output. In some non-limiting embodiments, the output may include a binary output where the binary output may include a high signal (e.g., "1") if the circuit determines that the threshold is satisfied by the input or a low signal (e.g., "0") to indicate that the threshold is not satisfied by the input. In some non-limiting embodiments, the output may include a message. For example, the output may include a message provided on a bus (e.g., a communication bus) of electrical system 400B.

In some non-limiting embodiments, if the power signal is positive, control circuit 402 may discard (e.g., delete) a value of the result of the multiplication and replace the value with zero and then provide the modified power signal to a low-pass filter. Additionally, control circuit 402 may compare the output of the low-pass filter to a threshold value (e.g., a threshold value equal to -1 W) provided by reference power component 402D and, if the threshold value is satisfied, generation of a charging control waveform (e.g., a voltage waveform) of electrical system 400B is deactivated (e.g., stopped, shut down, etc.). In some non-limiting embodiments, threshold component 402D may provide a reference waveform that may be used as the threshold value. In some non-limiting embodiments, the reference waveform may be based on a voltage measurement, such as an input voltage measurement at input port circuit 412.

In some non-limiting embodiments, control circuit 402 may cause generation of current and/or voltage (e.g., generation of the charging control waveform) within electrical system 400B to cease and/or deactivate electrical system 400B based on the output of comparator circuitry component 402E. For example, control circuit 402 may cause switch 414 to open and/or cause all energy storage modules 300 of PM 404 to enter a high impedance state. In some non-limiting embodiments, a high impedance state may include a configuration in which all switching elements 310 of energy storage modules 300 of PM 404 are open. In one example, if comparator circuitry component 402E provides a high signal as an output, control circuit 402 may cause generation of current and/or voltage within electrical system 400B to cease and/or deactivate electrical system 400B. In such an example, if comparator circuitry component 402E provides a low signal as an output, control circuit 402 may forego causing generation of current and/or voltage within electrical system 400B to cease and/or deactivate electrical system 400B.

By way of example, when a charging cord providing power to electrical system 400B becomes unplugged, there is no longer a closed circuit at input port circuit 412 and the input current to electrical system drops to zero. However, the generated voltage waveform also causes a current (e.g., a current that is small in comparison to a current generated during charging) in capacitors 414A and 414B of input port circuit 412 (e.g., capacitors which may be used to comply with electromagnetic compatibility (EMC) standards). As a load from capacitors 414A and 414B is purely capacitive, the current measured by CS 406 will not be in phase with a generated voltage waveform provided by waveform generator 410. In this example, a negative current while the voltage is positive, but down-sloping or a positive current when the voltage is negative, but up-sloping is produced, which causes a result of voltage multiplied by current (power) to be negative for a time interval within a 10ms half cycle. In one example, assuming a capacitance of 3µF and a calculated voltage slew rate of 104mV/ps (e.g., 1040V / 10ms = 104mV/µs), a resulting current may be equal to 312mA, which multiplied by 100V gives a power of 31.2W. In such an example, a choice of the following parameters may ensure a shutdown of the voltage generation within a proper time interval: current controller clamping value of +-10V; a current control algorithm execution rate of 1/100 kHz; capacitance of capacitors 414A and 414B equal to 3 microfarads (µF); and a threshold value for negative power equal to -1W.

In another example, when switch 414 is open, if there is no load or a light load in parallel to input circuitry of electrical system 400B, control circuit 402 may function as described in the example above. If there is a load capable of taking larger currents, a more significant negative power may be calculated from the measurement values of voltage and current, and control circuit 402 may act to deactivate electrical system 400B.

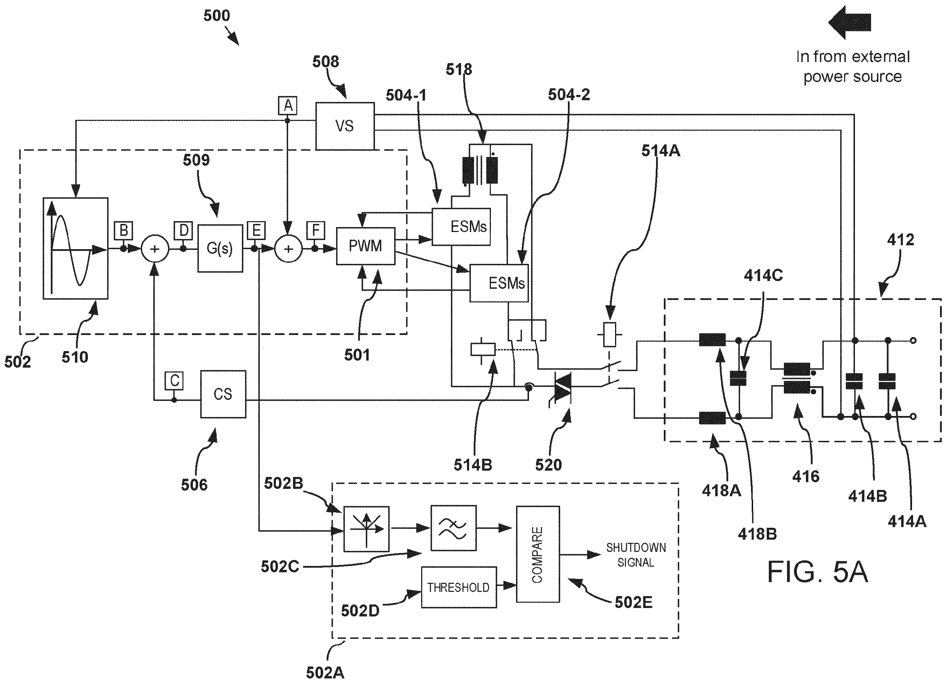

Referring now to FIG. 5A, FIG. 5A is a diagram of a non-limiting embodiment of electrical system 500 that provides for backfeed protection. In some non-limiting embodiments, electrical system 500 may be the same as electrical system 100. The electrical system 500 can be standalone, alternative to, or combinable with electrical system 400B. Similarly, electrical system 400B may be standalone, alternative to, or combinable with electrical system 500. As shown in FIG. 5A, electrical system 500 may include PWM 501, control circuit 502, first set of energy storage modules 504-1 (which may include one or more energy storage modules), second set of energy storage 504-2 (which may include one or more energy storage modules), CS 506, VS 508, input port circuit 412, switch 514A, switch 514B, choke 518, and triac circuit device 520. In some non-limiting embodiments, PWM 501 may be the same as or similar to PWM 401. In some non-limiting embodiments, control circuit 502 may comprise functionalities of control circuit 402 and/or controller 102. In some non-limiting embodiments, first set of energy storage modules 504-1 corresponds to energy storage modules 300-1 in FIG. 3C and second set of energy storage modules 504-2 corresponds to energy storage modules 300-2 in FIG. 3C. In some non-limiting embodiments, CS 506 may be the same as or similar to CS 406 and/or current sensor 106. In some non-limiting embodiments, VS 508 may be the same as or similar to VS 408 and/or voltage sensor 108. In some non-limiting embodiments, switch 514A may be the same as or similar to switch 414 and/or switch 315. In addition, in some non-limiting embodiments, switch 514B may the same as or similar to switch 322. In some non-limiting embodiments, choke 518 may be the same as or similar to choke 321. In some non-limiting embodiments, triac circuit device 520 may be the same as or similar to triac circuit device 420.

As shown in FIG. 5A, electrical system 500 may provide a saturation signal, which may be generated via an output E of the control function 509. Additionally, in some non-limiting embodiments, electrical system 500 may provide an output (e.g., an amount of power to be provided to a load) at two different voltage levels depending on a configuration of switch device 514B in a manner similar to described above with reference to FIG. 3C (e.g., in a manner similar to described for switch 322). However, for brevity, the output is not shown in FIG. 5A, but are shown in FIG. 3C.

In some non-limiting embodiments, PWM 501 may control parameters for power that is provided to energy storage modules 504-1 and/or 504-2. For example, control circuit 502 may control the parameters based on data provided by CS 506 and/or VS 508 and/or a charging control waveform provided by waveform generator 510. In some non-limiting embodiments, switch 514A may disconnect input port circuit 412 from electrical system 500. In some non-limiting embodiments, control circuit 502 may cause switch 514A to operate. For example, control circuit 502 may cause switch 514A to change from a first state to a second state. In some non-limiting embodiments, control circuit 502 may cause switch 514A to operate based on determining whether to cause generation of current and/or voltage within electrical system 500 to cease and/or deactivate electrical system 500.

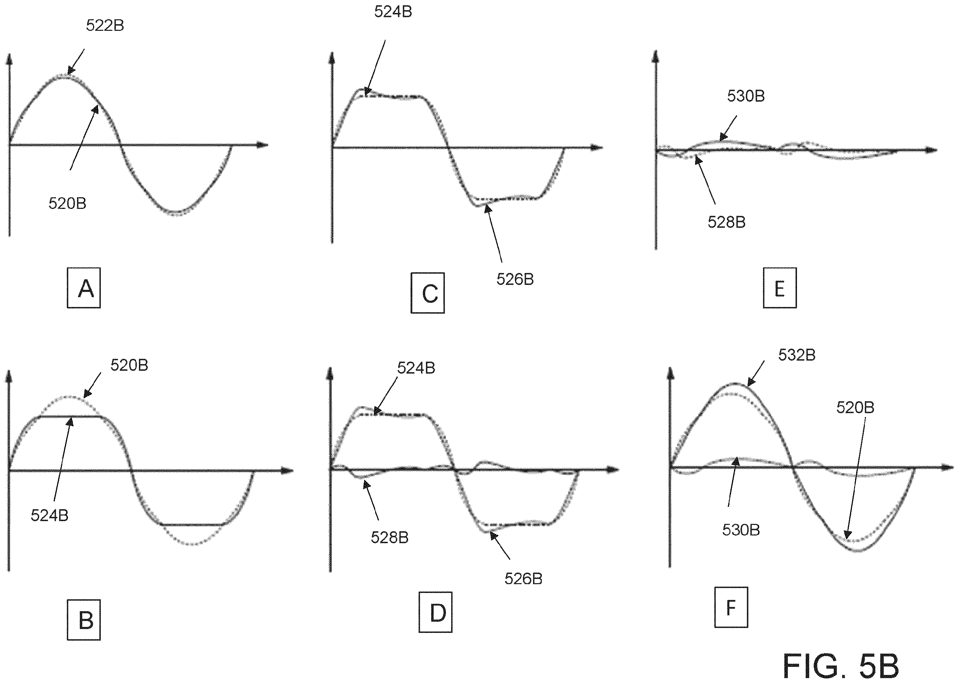

In the implementation shown in FIG. 5A and with reference to the waveforms shown in FIG. 5B, control circuit 502 may provide an effective backfeed protection scheme for electrical system 500. As shown in FIG. 5A, control circuit 502 may include transformation circuitry component 502B, low pass filter component 502C, threshold 502D, and comparator circuitry component 502E. For purposes of illustration, these aspects of control circuit 502 that may monitor a saturation signal (e.g., as an output of gain controller or control function (G(s)) 509) are shown as element 502A, but can be understood to be part of control circuit 502. In some non-limiting embodiments, transformation circuitry component 502B may comprise transformation circuitry component 402B, low pass filter component 502C may be the same as or similar to low pass filter component 402C, threshold 502D may be the same as or similar to reference power component 402D, and comparator circuitry component 502E may be the same as or similar to comparator circuitry component 402E.

As further shown in FIGS. 5A and 5B, in the plot taken at node A of electrical system 500, waveform 520B may be a voltage waveform that is produced based on a voltage measured by VS 508 at input port circuit 412 (e.g., a voltage across capacitor 414A). Waveform 522B is a pure sine wave shown in dotted line for comparison. As further shown in FIGS. 5A and 5B, in the plot taken at position B of electrical system 500, reference waveform 524B may be provided as an output of waveform generator 510. Reference waveform 524B may act as a reference waveform that is in phase with waveform 520B shown in dotted line for comparison. Reference waveform 524B may act as a reference waveform to provide a guide as to how a charging current for charging ESMs should ideally look.

As further shown in FIGS. 5A and 5B, in the plot taken at position C of electrical system 500, waveform 526B is a waveform of the actual charging current applied to ESMs. Reference waveform 524B is shown in dotted line for comparison. As further shown in FIGS. 5A and 5B, in the plot taken at position D of electrical system 500, waveform 528B is a waveform of an error signal that is based on a deviation between waveform 526B (shown in dotted line) and waveform 524B (shown in dotted line).

As further shown in FIGS. 5A and 5B, in the plot taken at position E of electrical system 500, waveform 530B is a waveform of the output of G(s) 509. In some non-limiting embodiments, the output of G(s) 509 may be based on a transfer function (as a non-limiting example, convolution operation) of waveform 528B (shown in dotted line) and an impulse response of G(s) 509. As further shown in FIGS. 5A and 5B, in the plot taken at position F of electrical system 500, waveform 532B is a waveform of a desired output voltage at an inverter circuit (e.g., inverter circuit 114 or power module 404) of electrical system 500. In some non-limiting embodiments, waveform 532B may be provided by adding waveform 520B and waveform 530B.

As further shown in FIG. 5A, control circuit 502 may in some non-limiting embodiments provide saturation signal (e.g., as, or as a part of, the level signal), via an output E of G(s) 509. For example, a saturation state at output E of G(s) 506 may be used as a saturation signal. In some non-limiting embodiments, control circuit 502 may perform a transformation operation (e.g., rectification), via transformation circuitry component 502B, on the output of G(s) 509 to convert or modify a value of the saturation signal so that the saturation signal can be easily monitored and/or evaluated. For example, transformation circuitry component 502B in some cases may covert any positive value of the saturation signal to a value of zero.

In some non-limiting embodiments, control circuit 502 may provide an output of transformation circuitry component 502B to low pass filter component 502C and control circuit 502 may filter the saturation signal. In some non-limiting embodiments, low pass filter component 502C may include a filter that is configured to filter out (e.g., attenuate) signals which are having a frequency higher than the bandwidth of the filter 502C. By doing so, false positives can be prevented from triggering a shutdown signal. For example, transient conditions which do not necessarily manifest as saturation may be rejected by the filter 502C. Thus, for example, higher frequency components of the input (e.g., the saturation signal) may be significantly attenuated by low pass filter component 502C, whereas lower frequency components pass with little or no attenuation. In some examples, the filter may be configured to filter the saturation signal based on a frequency of (e.g., a change of frequency of, a duration of a change of frequency of, etc.) the saturation signal.

In some non-limiting embodiments, control circuit 502 may provide the output of low pass filter component 502C as an input to comparator circuitry component 502E. In some non-limiting embodiments, comparator circuitry component 502E may include a circuit that compares an input to threshold 502D (e.g., a threshold value) and provides an output. In some non-limiting embodiments, the output may include a shutdown signal. In some non-limiting embodiments, the shutdown signal may include a high signal (e.g., "1") if the circuit determines that threshold 502D is satisfied by the input or a low signal (e.g., "0") to indicate that threshold 502D is not satisfied by the input. In some non-limiting embodiments, the shutdown signal may include or be in the form of a message. For example, the signal may include a message provided on a bus (e.g., a communication bus) of electrical system 500.

In some non-limiting embodiments, control circuit 502 may cause generation of current and/or voltage (e.g., generation of the charging control waveform) within electrical system 500 to cease and/or deactivate electrical system 500 based on the output of comparator circuitry component 502E. For example, control circuit 502 may cause switch 514A and/or switch 514B to open and/or cause all energy storage modules 504-1 and/or 504-2 to enter a high impedance state. In one example, if comparator circuitry component 502E provides a shutdown signal as an output, control circuit 502 may cause generation of current and/or voltage within electrical system 500 to cease and/or deactivate electrical system 500. In such an example, if comparator circuitry component 502E does not provide a shutdown signal as an output, control circuit 502 may forego causing generation of current and/or voltage within electrical system 500 to cease and/or deactivate electrical system 500.

Additionally or alternatively, saturation signal generated by control circuit 502 may be monitored with respect to a predetermined saturation threshold to determine if a corresponding limit has been reached. For example, when the saturation signal violates or exceeds a predetermined threshold value, it may be determined that a corresponding power limit has been reached and control circuit 502 may act to deactivate electrical system 500.

As a non-limiting example of a scenario involving the saturation signal, in response to the external power source being disconnected from the input port 412, the error signal (528B) at node D may significantly increase (e.g., current measurement via CS 506 deviates significantly from ideal waveform (524B) at node B). This can happen because there is no input power from the external power source against which the ESM 504 can create a voltage difference able to generate a controlled charging current. Under normal conditions, the voltage difference applied across the charging path inductors 418A/B would be converted to a controlled charging current. However, when the external power is disrupted, a large error signal (528B) at node D causes output E of the control function 509 to saturate (e.g. to supply voltage of the controller 502, e.g., +/-10V). Some non-limiting examples of detection of the level signal (e.g., via the saturation signal) are shown in FIG. 5B, FIG. 6, and FIG. 7. This can be used additionally or alternatively to the power signal for entering a safe state.

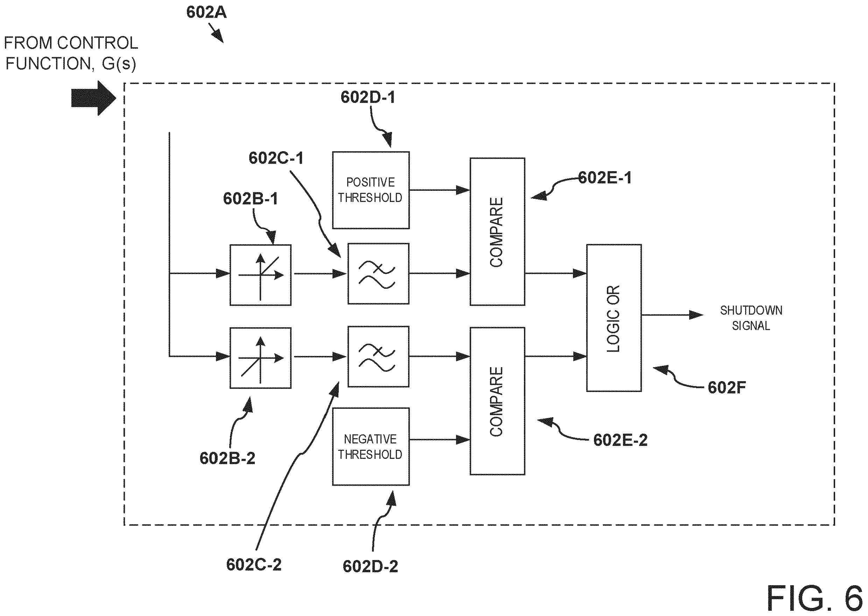

Referring now to FIG. 6, FIG. 6 is a diagram of an alternative arrangement of certain aspects of control circuit 502. In some non-limiting embodiments, the elements of 602A may replace those aspects of control circuit 502 depicted as 502A in the electrical system 500 shown in FIG. 5A. As shown in FIG. 6, control circuit may include transformation circuitry component 602B-1, transformation circuitry component 602B-2, low pass filter component 602C-1, low pass filter component 602C-2, positive threshold 602D-1, negative threshold 602D-2, comparator circuitry component 602E-1, comparator circuitry component 602E-2, and logic OR circuitry component 602F. In some non-limiting embodiments, transformation circuitry component 602B-1 and/or transformation circuitry component 602B-2 may work in combination with transformation circuitry component 402B and/or transformation circuitry component 502B, low pass filter component 602C-1 and/or low pass filter component 602C-2 may be the same as or similar to low pass filter component 402C and/or low pass filter component 502C, positive threshold 602D-1 and/or negative threshold 602D-2 may be the same as or similar to threshold 502D and/or reference power component 402D, and comparator circuitry component 602E-1 and/or comparator circuitry component 602E-2 may be the same as or similar to comparator circuitry component 402E and/or comparator circuitry component 502E.

In some non-limiting embodiments, transformation circuitry component 602B-1 and/or transformation circuitry component 602B-2 may receive an output of G(s) 509 as a saturation signal and perform a transformation operation. In one example, transformation circuitry component 602B-1 may selectively allow only positive values of the power signal to pass through to filter 602C-1, and transformation circuitry component 602B-2 may selectively allow only negative values of the saturation signal to pass through to filter 602C-2. For example, transformation circuitry component 602B-2 may replace any positive value of the saturation signal to a value of zero. Similarly, e.g., transformation circuitry component 602B-1 may replace any negative value of the saturation signal to a value of zero.

In some non-limiting embodiments, an output of transformation circuitry component 602B-1 may be provided to low pass filter component 602C-1 and an output of transformation circuitry component 602B-2 may be provided to low pass filter component 602C-2, to filter the saturation signal. In some non-limiting embodiments, low pass filter component 602C-1 and/or low pass filter component 602C-2 may include a filter that is configured to filter (e.g., attenuate) inputs. For example, higher frequency components of the input (e.g., the saturation signal) may be significantly attenuated by low pass filter component 602C-1 and/or low pass filter component 602C-2, whereas lower frequency components pass with little or no attenuation.

In some non-limiting embodiments, the output of low pass filter component 602C-1 may be provided as an input to comparator circuitry component 602E-1 and the output of low pass filter component 602C-2 may be provided as an input to comparator circuitry component 602E-2. In some non-limiting embodiments, comparator circuitry component 602E-1 may include a circuit that compares an input to positive threshold 602D-1 and provides an output. In some non-limiting embodiments, comparator circuitry component 602E-2 may include a circuit that compares an input to negative threshold 602D-2 and provides an output.

In some non-limiting embodiments, the output of either comparator circuitry component 602E-1 or comparator circuitry component 602E-2 may include a high signal (e.g., "1") if the circuit determines that a threshold (e.g., positive threshold 602D-1 or negative threshold 602D-2, respectively) is satisfied by the input or a low signal (e.g., "0") to indicate that the threshold is not satisfied by the input. In some non-limiting embodiments, an output of comparator circuitry component 602E-1 and an output of comparator circuitry component 602E-2 may be provided as inputs to logic OR circuitry component 602F. In the event that an output of comparator circuitry component 602E-1 and/or an output of comparator circuitry component 602E-2 indicates that positive threshold 602D-1 and/or negative threshold 602D-2 are satisfied, logic OR circuitry component 602F may provide a shutdown signal as an output.

In some non-limiting embodiments, control circuit 502 may cause generation of current and/or voltage (e.g., generation of the charging control waveform) within electrical system 500 to cease and/or deactivate electrical system 500 based on the output of logic OR circuitry component 602F. For example, control circuit 502 may cause switch 514A to open and/or cause all energy storage modules 504-1 and/or 504-2 to enter a high impedance state. In one example, if logic OR circuitry component 602F provides a shutdown signal as an output, control circuit 502 may cause generation of current and/or voltage within electrical system 500 to cease and and/or deactivate electrical system 500. In such an example, if logic OR circuitry component 602F does not provide a shutdown signal as an output, control circuit 502 may forego causing generation of current and/or voltage within electrical system 500 to cease and/or deactivate electrical system 500.

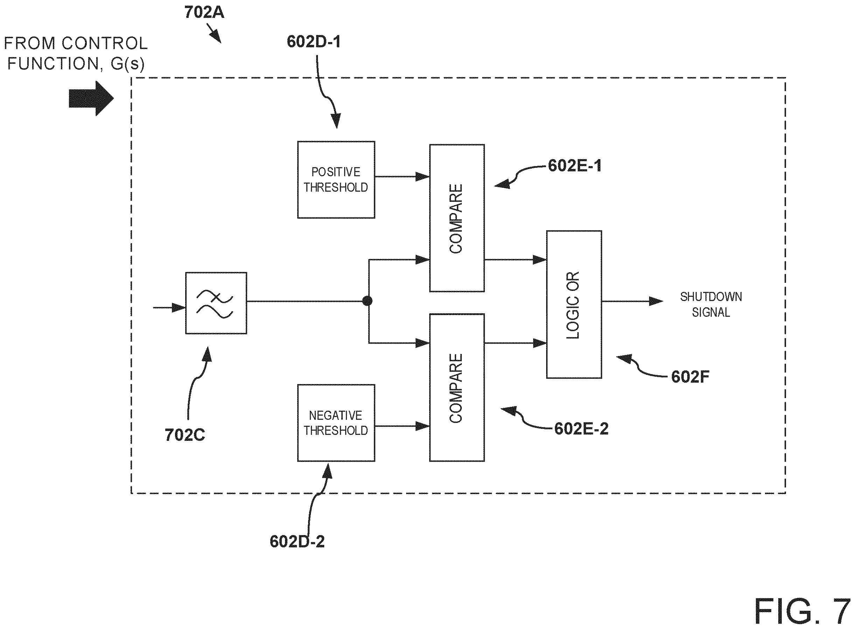

Referring now to FIG. 7, FIG. 7 is a diagram of an alternative arrangement of certain aspects of control circuit 502. In some non-limiting embodiments, the elements of 702A may replace those aspects of control circuit 502 depicted as 502A in the electrical system 500 shown in FIG. 5A. As shown in FIG. 7, control circuit may include low pass filter component 702C, positive threshold 602D-1, negative threshold 602D-2, comparator circuitry component 602E-1, comparator circuitry component 602E-2, and logic OR circuitry component 602F. In some non-limiting embodiments, low pass filter component 702C may be the same as or similar to low pass filter component 502C and/or low pass filter component 402C.

In some non-limiting embodiments, a power signal output from G(s) 509 may be provided as an input to low pass filter component 702C. In some non-limiting embodiments, low pass filter component 702C may include a filter that is configured to filter (e.g., attenuate) inputs. For example, higher frequency components of the input (e.g., the power signal) may be significantly attenuated by low pass filter component 702C, whereas lower frequency components pass with little or no attenuation. In some non-limiting embodiments, an output of low pass filter component 702C may be provided as an input to comparator circuitry component 602E-1 and/or comparator circuitry component 602E-2. In some non-limiting embodiments, positive threshold 602D-1, negative threshold 602D-2, comparator circuitry component 602E-1, comparator circuitry component 602E-2, and logic OR circuitry component 602F may function as described above with regard to FIG. 6.

In some non-limiting embodiments, control circuit 502 may cause generation of current and/or voltage (e.g., generation of the charging control waveform) within electrical system 500 to cease and/or deactivate electrical system 500 based on the output of logic OR circuitry component 602F in a manner similar to described above for FIG. 6.

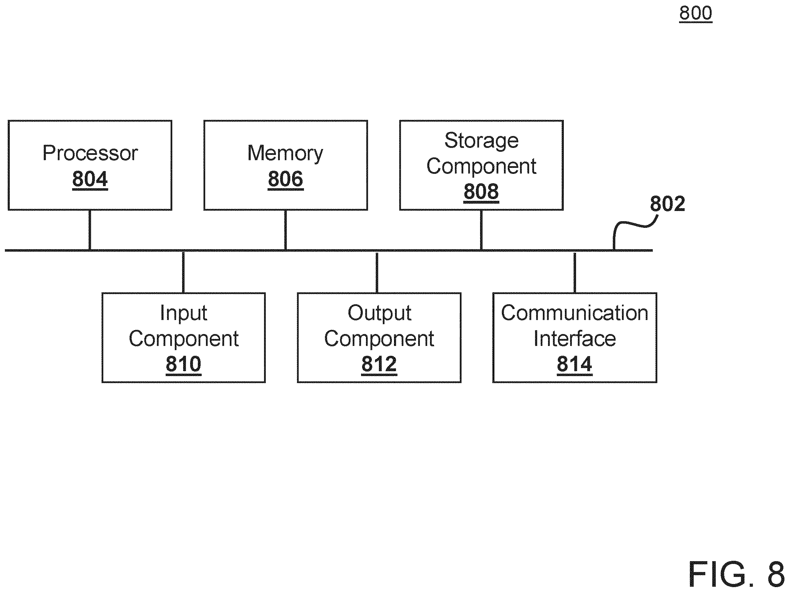

Referring now to FIG. 8, FIG. 8 is a diagram of example components of device 800, according to some non-limiting embodiments or aspects. Device 800 may correspond to at least one of controller 102, power module 104, current sensor 106, voltage sensor 108, and/or waveform generator 110 in FIG. 1; PWM 401, one or more components of control circuit 402, PM 404, G(s) 409 and/or waveform generator 410 in FIG. 4A; and/or PWM 501, one or more components of control circuit 502, energy storage modules 504-1 and 504-2, G(s) 509 and/or waveform generator 510 in FIG. 5A, 6, and 7. In some non-limiting embodiments, such systems or devices may include at least one device 800 and/or at least one component of device 800. The number and arrangement of components shown in FIG. 8 are provided as an example. In some non-limiting embodiments, device 800 may include additional components, fewer components, different components, or differently arranged components than those shown in FIG. 8. Additionally or alternatively, a set of components (e.g., one or more components) of device 800 may perform one or more functions described as being performed by another set of components of device 800.

As shown in FIG. 8, device 800 may include bus 802, processor 804, memory 806, storage component 808, input component 810, output component 812, and communication interface 814. Bus 802 may include a component that permits communication among the components of device 800. In some non-limiting embodiments, processor 804 may be implemented in hardware, firmware, or a combination of hardware and software. For example, processor 804 may include a processor (e.g., a central processing unit (CPU), a graphics processing unit (GPU), an accelerated processing unit (APU), etc.), a microprocessor, a digital signal processor (DSP), and/or any processing component (e.g., a field-programmable gate array (FPGA), an application-specific integrated circuit (ASIC), etc.) that can be programmed perform a function. Memory 806 may include random access memory (RAM), read only memory (ROM), and/or another type of dynamic or static storage device (e.g., flash memory, magnetic memory, optical memory, etc.) that stores information and/or instructions for use by processor 804.

With continued reference to FIG. 8, storage component 808 may store information and/or software related to the operation and use of device 800. For example, storage component 808 may include a hard disk (e.g., a magnetic disk, an optical disk, a magneto-optic disk, a solid-state disk, etc.) and/or another type of computer-readable medium. Input component 810 may include a component that permits device 800 to receive information, such as via user input (e.g., a touch screen display, a keyboard, a keypad, a mouse, a button, a switch, a microphone, etc.). Additionally or alternatively, input component 810 may include a sensor for sensing information (e.g., a global positioning system (GPS) component, an accelerometer, a gyroscope, an actuator, etc.). Output component 812 may include a component that provides output information from device 800 (e.g., a display, a speaker, one or more light-emitting diodes (LEDs), etc.). Communication interface 814 may include a transceiver-like component (e.g., a transceiver, a separate receiver and transmitter, etc.) that enables device 800 to communicate with other devices, such as via a wired connection, a wireless connection, or a combination of wired and wireless connections. Communication interface 814 may permit device 800 to receive information from another device and/or provide information to another device. For example, communication interface 814 may include an Ethernet interface, an optical interface, a coaxial interface, an infrared interface, a radio frequency (RF) interface, a universal serial bus (USB) interface, a Wi-Fi^{®} interface, a cellular network interface, and/or the like.

Device 800 may perform one or more processes described herein. Device 800 may perform these processes based on processor 804 executing software instructions stored by a computer-readable medium, such as memory 806 and/or storage component 808. A computer-readable medium may include any non-transitory memory device. A memory device includes memory space located inside of a single physical storage device or memory space spread across multiple physical storage devices. Software instructions may be read into memory 806 and/or storage component 808 from another computer-readable medium or from another device via communication interface 814. When executed, software instructions stored in memory 806 and/or storage component 808 may cause processor 804 to perform one or more processes described herein. Additionally or alternatively, hardwired circuitry may be used in place of or in combination with software instructions to perform one or more processes described herein. Thus, embodiments described herein are not limited to any specific combination of hardware circuitry and software. The term "configured to," as used herein, may refer to an arrangement of software, device(s), and/or hardware for performing and/or enabling one or more functions (e.g., actions, processes, steps of a process, and/or the like). For example, "a processor configured to" may refer to a processor that executes software instructions (e.g., program code) that cause the processor to perform one or more functions.

Other non-limiting examples or aspects are set forth in the following illustrative and exemplary numbered clauses:
Clause 1: An electrical system, comprising: an input port circuit configured to receive electrical energy from an external power source; a rechargeable energy storage element operable to store electrical energy received via the input port circuit; and at least one control circuit operable to: apply a charging control waveform at the input port circuit causing the rechargeable energy storage element to be charged in a controlled manner with regard to a current applied to the rechargeable energy storage element; provide a level signal indicative of flow of current and/or power between the input port circuit and the rechargeable energy storage element; monitor the level signal with regard to a threshold value; and stop applying the charging control waveform at the input port circuit upon a determination that the level signal satisfies the threshold value.
Clause 2: The electrical system of clause 1, wherein the level signal comprises a power signal, and wherein at least one control circuit is operable to: measure a current at the input port circuit to provide an input current measurement; measure a voltage at the input port circuit to provide an input voltage measurement; and generate the power signal based upon the input current measurement and the input voltage measurement.
Clause 3: The electrical system of clause 1 or clause 2, further comprising: an inverter circuit connected to the rechargeable energy storage element, wherein the inverter circuit is configured to convert electrical energy stored in the rechargeable energy storage element to an alternating current (AC) output voltage.
Clause 4: The electrical system of clauses 2 or 3, wherein the at least one control circuit is further configured to: generate the charging control waveform based on the voltage at the input port circuit.
Clause 5: The electrical system of any of clauses 2-4, wherein, when generating the charging control waveform, the at least one control circuit is configured to: generate the charging control waveform such that the charging control waveform is time synchronized with the voltage at the input port circuit.
Clause 6: The electrical system of any of clauses 2-5, wherein, when generating the power signal using the input current measurement and the input voltage measurement, the at least one control circuit is configured to: multiply the input current measurement and the input voltage measurement.
Clause 7: The electrical system of any of clauses 2-6, wherein, when measuring the current at the input port circuit to provide the input current measurement, the at least one control circuit is configured to: measure a charging current provided to at least one rechargeable energy storage element.
Clause 8: The electrical system of any of clauses 2-7, wherein, when measuring the voltage at the input port circuit to provide the input voltage measurement, the at least one control circuit is configured to: measure a voltage across a capacitor of the input port circuit to provide the input voltage measurement.
Clause 9: The electrical system of any of clauses 2-8, wherein the at least one control circuit is further configured to: determine whether the power signal satisfies the threshold value.
Clause 10: The electrical system of clause 9, wherein, when determining whether the power signal satisfies the threshold value, the at least one control circuit is configured to: provide the power signal as an input to a low pass filter; and determine whether the power signal satisfies the threshold value based on an output of the low pass filter.
Clause 11: The electrical system of clause 10, wherein the low pass filter is configured to filter the power signal based on a time element associated with at least one of the following: the input current measurement; the input voltage measurement; or any combination thereof.
Clause 12: The electrical system of any of above clauses, wherein the at least one control circuit comprises a control function operable to generate the charging control waveform, and the level signal comprises a saturation signal which is generated in response to a saturation of the control function.
Clause 13: A method for operating an electrical system that receives, at an input port circuit, electrical energy from an external power source, comprising: applying a charging control waveform at the input port circuit so as to cause a rechargeable energy storage element to be charged via the electrical energy received at the input port circuit in a controlled manner with regard to a current applied to the rechargeable energy storage element; providing a level signal indicative of flow of current and/or power between the input port circuit and the rechargeable energy storage element; monitoring the level signal with regard to a threshold value; and stopping application of the charging control waveform at the input port circuit upon determining that the level signal satisfies the threshold value.
Clause 14: The method of clause 13, wherein the level signal comprises a power signal, wherein the method comprises: measuring a current at the input port circuit to provide an input current measurement; measuring a voltage at the input port circuit to provide an input voltage measurement; and generating the power signal based upon the input current measurement and the input voltage measurement.
Clause 15: The method of clause 14, further comprising: generating the charging control waveform based on the voltage at the input port circuit.
Clause 16: The method of clauses 14 or 15, wherein generating the charging control waveform comprises: generating the charging control waveform such that the charging control waveform is time synchronized with the voltage at the input port circuit.
Clause 17: The method of any of clauses 14-16, wherein generating the power signal comprises: multiplying the input current measurement and the input voltage measurement.
Clause 18: The method of any of clauses 14-17, wherein measuring the current at the input port circuit to provide the input current measurement comprises: measuring a charging current provided to at least one rechargeable energy storage element.
Clause 19: The method of any of clauses 14-18, wherein measuring the voltage at the input port circuit to provide the input voltage measurement comprises: measuring a voltage across a capacitor of the input port circuit to provide the input voltage measurement.
Clause 20: The method of any of clauses 14-19, further comprising: determining whether the power signal satisfies the threshold value.
Clause 21: The method of any of clauses 14-20, wherein determining whether the power signal satisfies the threshold value comprises: providing the power signal as an input to a low pass filter; and determining whether the power signal satisfies the threshold value based on an output of the low pass filter.
Clause 22: The method of clause 21, wherein the low pass filter is configured to filter the power signal based on a time element associated with at least one of the following: the input current measurement; the input voltage measurement; or any combination thereof.
Clause 23: The method of any of the above method clauses, wherein the level signal comprises a saturation signal which is generated in response to a saturation of a control function operable to generate the charging control waveform.
Clause 24: A system comprising means to perform the steps of any of the above method clauses.
Clause 25: A computer program product comprising computer-executable instructions for causing a system (e.g., an electrical system and/or a controller thereof) to perform or cause to be performed any of the above methods.
Clause 26: An electrical system, comprising: at least one control circuit operable to: apply a charging control waveform at an input port circuit causing a rechargeable energy storage element to be charged in a controlled manner with regard to a current applied to a rechargeable energy storage element; provide a level signal indicative of flow of current and/or power between the input port circuit and the rechargeable storage element; monitor the level signal with regard to a threshold value; and stop applying the charging control waveform at the input port circuit based on determining that the level signal satisfies the threshold value.
Clause 27: Electrical system of clause 26, wherein the level signal comprises a power signal, and wherein the at least one control circuit is also operable to: measure a current at the input port circuit to provide an input current measurement; measure a voltage at the input port circuit to provide an input voltage measurement; generate the power signal using the input current measurement and the input voltage measurement.

Although embodiments have been described in detail for the purpose of illustration and description, it is to be understood that such detail is solely for that purpose and that embodiments are not limited to the disclosed embodiments, but, on the contrary, are intended to cover modifications and equivalent arrangements that are within the spirit and scope of the appended claims. For example, it is to be understood that the present disclosure contemplates that, to the extent possible, one or more features of any embodiment or aspect can be combined with one or more features of any other embodiment or aspect. In fact, any of these features can be combined in ways not specifically recited in the claims and/or disclosed in the specification. Although each dependent claim listed below may directly depend on only one claim, the disclosure of possible implementations includes each dependent claim in combination with every other claim in the claim set.

## Claims

1. A method for operating an electrical system that receives, at an input port circuit, electrical energy from an external power source, comprising:
applying a charging control waveform at the input port circuit so as to cause a rechargeable energy storage element to be charged via the electrical energy received at the input port circuit in a controlled manner with regard to a current applied to the rechargeable energy storage element;
providing a level signal indicative of flow of current and/or power between the input port circuit and the rechargeable energy storage element;
monitoring the level signal with regard to a threshold value; and
stopping application of the charging control waveform at the input port circuit upon determining that the level signal satisfies the threshold value.

2. The method of claim 1, wherein the level signal comprises a power signal, wherein the method comprises:
measuring a current at the input port circuit to provide an input current measurement;
measuring a voltage at the input port circuit to provide an input voltage measurement; and
generating the power signal based upon the input current measurement and the input voltage measurement.

3. The method of claim 2, further comprising:
generating the charging control waveform based on the voltage at the input port circuit.

4. The method of claim 2 or 3, wherein generating the charging control waveform comprises:
generating the charging control waveform such that the charging control waveform is time synchronized with the voltage at the input port circuit.

5. The method of any of claims 2-4, wherein generating the power signal comprises:
multiplying the input current measurement and the input voltage measurement.

6. The method of any of claims 2-5, wherein measuring the current at the input port circuit to provide the input current measurement comprises:
measuring a charging current provided to at least one rechargeable energy storage element.

7. The method of any of claims 2-6, wherein measuring the voltage at the input port circuit to provide the input voltage measurement comprises:
measuring a voltage across a capacitor of the input port circuit to provide the input voltage measurement.

8. The method of any of claims 2-7, further comprising:
determining whether the power signal satisfies the threshold value.

9. The method of any of claims 2-8, wherein determining whether the power signal satisfies the threshold value comprises:
providing the power signal as an input to a low pass filter; and
determining whether the power signal satisfies the threshold value based on an output of the low pass filter.

10. The method of claim 9, wherein the low pass filter is configured to filter the power signal based on a time element associated with at least one of the following:
the input current measurement;
the input voltage measurement; or
any combination thereof.

11. The method of any of the above method claims, wherein the level signal comprises a saturation signal which is generated in response to a saturation of a control function operable to generate the charging control waveform.

12. A system comprising means to perform the steps of any of the above method claims.

13. A computer program product comprising computer-executable instructions for causing a controller of an electrical system to perform or cause to be performed any of the above methods.

14. An electrical system, comprising:
an input port circuit configured to receive electrical energy from an external power source;
a rechargeable energy storage element operable to store electrical energy received via the input port circuit; and
at least one control circuit operable to:
apply a charging control waveform at the input port circuit causing the rechargeable energy storage element to be charged in a controlled manner with regard to a current applied to the rechargeable energy storage element;
provide a level signal indicative of flow of current and/or power between the input port circuit and the rechargeable energy storage element;
monitor the level signal with regard to a threshold value; and
stop applying the charging control waveform at the input port circuit upon a determination that the level signal satisfies the threshold value.

15. An electrical system, comprising:
at least one control circuit operable to:
apply a charging control waveform at an input port circuit causing a rechargeable energy storage element to be charged in a controlled manner with regard to a current applied to a rechargeable energy storage element;
provide a level signal indicative of flow of current and/or power between the input port circuit and the rechargeable storage element;
monitor the level signal with regard to a threshold value; and
stop applying the charging control waveform at the input port circuit based on determining that the level signal satisfies the threshold value.
